(19) **Europäisches Patentamt**
**European Patent Office**
**Office européen des brevets**

(11) **EP 1 276 288 B1**

(12) **EUROPEAN PATENT SPECIFICATION**

(45) Date of publication and mention
of the grant of the patent:
**10.01.2007 Bulletin 2007/02**

(51) Int Cl.:
*H04L 27/26* (2006.01)     *H04L 25/02* (2006.01)

(21) Application number: **01116839.0**

(22) Date of filing: **10.07.2001**

(54) **Reference symbols for channel estimation with multicarrier transmission**

Referenzsymbole zur Kanalschätzung bei Mehrträgerübertragung

Symboles de référence pour l'estimation de canal pour la transmission multiporteuse

(84) Designated Contracting States:
**DE ES FR GB IT**

(43) Date of publication of application:
**15.01.2003 Bulletin 2003/03**

(73) Proprietors:
• **Sony Deutschland GmbH**
**10785 Berlin (DE)**
• **Siemens AG**
**80333 München (DE)**

(72) Inventors:
• **Boehnke, Ralf,**
**Advanced Technology Cent. Stuttgart**
**70327 Stuttgart (DE)**
• **Bolinth, Edgar**
**41189 Mönchengladbach (DE)**

(74) Representative: **Rupp, Christian et al**
**Mitscherlich & Partner**
**Patent- und Rechtsanwälte**
**Sonnenstrasse 33**
**80331 München (DE)**

(56) References cited:
**WO-A-99/53665**          **GB-A- 2 313 261**

• **"Broadband Radio Access Networks (BRAN); HIPERLAN Type 2; Physical (PHY) Layer" ETSI TS 101 475, [Online] February 2001 (2001-02), XP002183214 Retrieved from the Internet: < URL:http://pda.etsi.org/> [retrieved on 2001-11-15]**
• **"Wireless LAN Medium Access Control (MAC) and Physical Layer (PHY) specifications" IEEE STANDARD 802.11A-1999, 1999, XP002183215**
• **VAN NEE, A WATER: "New high-rate wireless LAN standards" IEEE COMMUNICATIONS MAGAZINE, vol. 37, no. 12, December 1999 (1999-12), pages 82-88, XP000908328 Piscataway, US ISSN: 0163-6804**

**Description**

FIELD AND BACKGROUND OF THE INVENTION

The present invention generally relates to the field of wireless communication systems with high-speed mobile access, especially to wireless communication systems using reference symbols to support channel tracking in high-speed wireless multi-carrier systems.

In comparison with a wire-bound network, mobile radio communications have higher demands on a transmission system. On the one hand, a broadband radio channel, as needed for the transmission of high data rates, is characterized by severe attenuation fades (frequency-selective fading) caused by the multipath propagation of the transmitted mobile radio signals. On the other hand, it exhibits a time-variant behavior due to the mobility of the receiver, which possibly requires a continuous adaptation of the transmission system to said behavior.

If a conventional single-carrier transmission system is applied in an environment with said severe transmission conditions, the channel equalization, which is supposed to eliminate the influence of the radio channel as far as possible, can be very extensive. The choice of an appropriate modulation technique for wireless data communication is therefore a critical issue due to the adverse influence of the dispersive and mostly time-variant mobile radio channel. In recent years, the interest in multi-carrier modulation for wireless transmission has been revived, whereas in former times the practicality of this concept appeared to be limited.

An approach to multi-carrier modulation which can easily be realized is *Orthogonal Frequency Division Multiplexing* (OFDM). OFDM offers advantages in transmission over severe multipath channels, so that there is an increased interest in applying OFDM in high-rate mobile or portable data transmission today. Wireless Asynchroncus Transfer Mode (W-ATM) or broadband access to local area networks are both potential areas of application. Meanwhile, OFDM has been standardized for several applications. Under the synonym DMT, it is the world standard for Asymmetric Digital Subscriber Lines (ADSL) which operates with twisted-pair lines of the public telephone network used as physical transmission medium. Multi-carrier modulation is also considered for use in high-speed modems, but so far all ITU-T (formerly CCITT) standards refer to single-carrier systems. OFDM was initially standardized for the two high-speed digital radio transmission systems Digital Audio Broadcasting (DAB) and Digital Video Broadcasting Terrestrial transmission mode (DVB-T), which are used for transmitting digital radio and television signals. Both systems are real broadcast systems for transmitting data via broadband radio channels. Although DAB was originally developed for mobile reception, it is able to transmit data rates of up to 1.7 MBit/s. In comparison, with DVB-T more than 20 MBit/s can be transmitted -, however, the system was originally developed for stationary reception. Aside from video signal transmission, today additional data services are planned for DVB-T. Generally, OFDM is a viable technology for high-speed data transmission over spectrally shaped noisy channels.

A further field of application, for which the OFDM transmission system plays an increasing role, is the mobile access to wire-bound networks with the aid of a local radio network, whereby high data rates shall also be transmitted. In this connection, the HIPERLAN/2 standard as well as an extension of the IEEE 802.11 standard for the 5 GHz area can be mentioned. In both systems the OFDM transmission system is applied. For the next generation of mobile radio systems broadband single-carrier systems have been specified with the denotation *Universal Mobile Telecommunications System* (UMTS). A higher data rate would cause a very high expenditure during the channel equalization. In this case, OFDM could also offer a sensible alternative for real mobile applications, and thus represent an important step for the mobile Internet.

Since 1966 FDM systems with overlapping spectra have been described in several publications. The next step was the proposition to implement a FDM-system with the aid of the FFT. Finally, a complete OFDM system applied to frequency-selective channels was introduced in 1977 that already comprised signal generation by means of FFT, and a so-called "guard interval". In the following, OFDM was analyzed for channels with frequency-selective and frequency-nonselective fading, and the use of OFDM for broadcast applications with mobile reception was proposed. Meanwhile, said transmission system forms the basis for the broadcast systems DAB and DVB-T as mentioned above.

Conventional single-carrier modulation methods for the transmission at high symbol rates experience a severe limitation in time-dispersive and frequency-selective channels due to their sensitivity to intersymbol interference (ISI). To handle ISI, usually the entire bandwidth of the single-carrier signal has to be (adaptively) equalized by quite complex time-domain channel equalizers, like Viterbi equalizers. Thereby, the complexity of a channel equalizer increases with the number of the ISIs which have to be eliminated. If a high data rate R of about $10^7$ modulation symbols per second is transmitted over a radio channel having a maximum delay $\tau_{max}$ of 10 $\mu$s, ISIs can arise extending over 100 modulation symbols. A corresponding equalizer can be too expensive for an implementation. In addition, it is conceivable that the adaptation of the filter coefficients to a time-variant mobile radio channel would show an unstable behavior. Moreover, together with channel coding, reliability information on the equalized channel symbols is desired. Especially, if the channels are as difficult as in mobile communications, channel estimation is complex.

In conventional multi-carrier schemes the transmitted data is split into a number of parallel data streams, each one used to modulate a separate subcarrier. If a classical Frequency Division Multiplex (FDM) is applied, different signals are independently generated and parallel transmitted using different frequency bands. The channel spectrum is parsed into a large number of parallel subchannels which are, in the ideal case, independent and ideally frequency-nonselective. Thereby, the spectral subcarrier separation in the receiver is achieved by means of steep bandpass filters, resulting in a considerable amount of realization complextity, especially if the number of the employed subcarriers is very high.

OFDM is known to be an elegant solution for the severe ISI problem, as it avoids an equalization of the entire band. OFDM transmission systems manage the above-described situation by dividing up the broadband radio channel into many narrow-band subchannels. Instead of converting a single carrier with $10^7$ second modulation symbol per second, for instance, 1,000 subcarriers modulated with only $10^4$ modulation symbols per second can be transmitted. Considering a channel with a maximum delay $\tau_{max}$ of 10 $\mu$s, ISIs can thus easily be equalized or avoided. Compared with other multiplex techniques, the main advantage of OFDM is that no high-order bandpass filters with steep slopes are needed, as each orthogonal subcarrier can use the entire spectrum. With the aid of orthogonal subcarriers an easy separation of the individual subcarriers in the receiver is achievable.

If an OFDM transmission system is applied, the broadband radio channel is subdivided into a plurality of narrow-band subchannels (subcarriers) being independently modulated. The signals are generated together with the aid of a Discrete Fourier Transform (DFT), and their spectra overlap mutually. Thereby, signal generation is simplified and the bandwidth efficiency of the system can be increased. Each subchannel only covers a small part of the total available frequency band, and as a consequence channel equalization becomes much simpler than in a single-carrier system. Instead of severely distorting several adjacent symbols, burst errors caused by fading only slightly distort a plurality of symbols.

In comparison with single-carrier modulation techniques, the most important advantage of the OFDM transmission system arises in connection with frequency-selective channels. Within the bandwidth occupied by an individual subcarrier the radio channel can approximately be deemed as frequency-nonselective. In this case, the signal processing in the receiver can extremely be simplified, as the orthogonality of the OFDM subcarriers can be maintained during the whole transfer over the mobile radio channel. Furthermore, while executing a channel equalization, just one complex transmission coefficient has to be estimated for each subcarrier. On the assumption that each subchannel of an OFDM system can be deemed as a narrow-band channel, the channel influence only consists in a multiplication with a complex transmission coefficient, aside from additive noise. Thereby, the object of a channel equalizer decreases to dividing each symbol by its respective transmission coefficient. In this way, a simple channel equalization is enabled, whereas possibly an equalization is not realizable if a single-carrier system with the same bandwidth is employed.

The above-described method was already proposed in the end of the 1960s in different publications. However, it could not efficiently be implemented, since sufficiently powerful semiconductor components were not available at that time. Today even relatively complex OFDM transmission systems with high data rates are realizable to be used for frequency-selective channels. In order to realize said channel estimation, the transmission coefficients of specific subcarriers can be measured and the remaining transmission coefficients can be determined by interpolation. Channel estimation in OFDM systems is usually performed by means of pilot-assisted modulation, in which the minimum mean-square error (MMSE) channel estimator is employed to exploit both time- and frequency-domain correlation. For this purpose, so-called pilot patterns (a combination of known symbols) are multiplexed into the transmitted symbol stream. Subsequently, the channel equalization can easily be performed. Thereby, a coherent demodulation is enabled and, for instance, a Quadrature Amplitude Modulation (QAM) can be applied. Alternatively a differential modulation like Differential Phase-Shift Keying (M-DPSK) can be used. In connection with the OFDM transmission system, differential modulation techniques actually do not need any channel estimatation and equalization, so that the realization of said transmission systems becomes quite simple.

As described above, the (adaptive) equalization for coherent demodulation is simplified to a frequency-domain equalization comprising one complex multiplier per subcarrier in an appropriately designed OFDM system. The multipath channel causes an attenuation and a phase rotation of each subcarrier amplitude. If phase-shift keying (PSK) is used as a modulation technique in each subcarrier, not even an amplitude equalization is needed; it is enough to correct the phase variation. Further, if differentially encoded modulation is used in the subcarriers, no channel estimation and correction is needed at all.

In terrestrial data transmission like broadcast or mobile radio, severe multipath distortion is encountered. The possibly very strong channel attenuation of single subcarriers makes channel coding with soft-decision decoding indispensable. Hence, reliability information for bits or symbols must be derived from the received symbols (and the actual channel state) in the single subcarriers. This information serves as input to soft-decision channel decoding algorithms, which - in conjunction with time and frequency interleaving - gives good results for OFDM transmission in frequency-selective channels. Together with channel coding, one considerable advantage of OFDM is robustness against multipath propagation. To achieve immunity to ISI, the OFDM system has to be properly designed. This comprises a sufficiently large number of low bitrate multiplex subcarriers, so that the transmission bandwidth is indeed parsed into frequency-nonselective subchannels, which do not need to be equalized in the strict sense of compensating ISI. Apart from this, a so-called "guard interval" of sufficient duration must be provided to conserve mutual orthogonality among the subcarriers.

When using coherent modulation in the subcarriers, a channel estimation must be performed in the OFDM receiver. The optimality of a two-dimensional Wiener filter to obtain estimates for the channel gains of a dispersive and time-variant channel is well-known in the state of the art. Thereby, the two dimensions need to be identified with the frequency-time grid spanned by the subsequent OFDM symbols in the frequency domain. Furthermore, so-called "pilot tones" are regularly multiplexed into the information-carrying OFDM symbols.

Aside from channel estimation and channel coding, the synchronization of transmitter and receiver is another important issue if OFDM is applied. It can be achieved by means of a so-called cyclic prefix (CP), a part of the preamble field (P) which is added to the OFDM symbol stream.

Despite the above-mentioned advantages, some difficulties are still inherent to OFDM. OFDM transmission systems are degraded by all influences which destroy said mutual subcarrier orthogonality. Hence, it is sensitive to carrier frequency offsets, and therefore, synchronization within a small fraction of a subcarrier spacing is crucial. Additionally, the OFDM symbol start needs to be identified in the receiver. Further negative effects like the degradation in a frame-offset or timing-jitter scenario and the influence of a non-synchronized sampling are analyzed in the relevant literature.

An OFDM signal is an ensemble of many narrowband subchannels. Therefore, the transmit signal of OFDM exhibits a high dynamic range and a large crest factor. Intermodulation as well as out-of-band power (spurious tones) are generated. Nonlinear devices like the power amplifier of the transmitter must be able to cope with the high dynamic range of the transmit signal to keep the out-of-band radiation under a certain limit imposed by the employed spectrum masks according to the underlying standard. This leads to an inefficient amplification and a large power consumption. Due to said effects many bit errors still occur - even at a high mean signal-to-noise ratio. For this reason, an efficient channel coding is needed for transmission systems using OFDM.

Moreover, the energy received during the guard interval is wasted, as it is not used for the detection process of the receiver. Especially, if the maximum channel impulse response duration is long in comparison with the modulation interval, the number of carriers must be high to keep the loss in power efficiency due to the guard interval in reasonable limits.

An OFDM baseband signal $s(t)$ consists of $K$ equidistant subcarrier signals $g_k(t)$ $(1 \leq k \leq K)$ having a subchannel spacing of $\Delta f$. Thereby, the system bandwidth $B_{sys}$ is divided up into $K$ equidistant subchannels. In this case, the subcarriers $g_k(t)$ are orthogonally in pairs within a time period $T_s = 1 / \Delta f$. In order to avoid ISI, a so-called "guard interval" with the length $T_G$ is prefixed to the signal $g_k(t)$ representing a periodic repetition of said signal $g_k(t)$. Hence, the symbol duration $T_{MC}$ of a multi-carrier signal totally yields

$$T_{MC} = T_S + T_G.$$

In the receiver the guard interval is removed, and merely the actual used symbol duration $T_S$ is evaluated. If the chosen length $T_G$ of the guard interval is larger than the maximum delay of the channel, ISI can completely be avoided. Each of the $K$ subcarrier signals $g_k(t)$ can be modulated with a complex modulation symbol $S_{n,k}$, wherein the index n refers to the modulation interval and the index k indicates the subcarrier signal $g_k(t)$ in the neighboring OFDM block. If the OFDM baseband signal $s(t)$ is sampled with a sampling rate of $K \cdot \Delta f$ $(\equiv B)$, a time-discrete signal corresponding to the Inverse Discrete Fourier Transform (IDFT) of $S_{n,k}$, the n-th transmitted modulation symbol of the k-th subcarrier $g_k(t)$, arises for the n-th OFDM block. Thus, the time-discrete transmission signal can be generated from the sequence of the modulation symbols of all $K$ subcarrier signals $g_k(t)$ by an IDFT which is realized as an Inverse Fast Fourier Transform (IFFT). Correspondingly, the modulation symbols $R_{n,k}$ can be retrieved from the sampled receive signal in the receiver by means of a Fast Fourier transform (FFT). In this case, $R_{n,k}$ is the n-th received modulation symbol of the k-th subcarrier signal $g_k(t)$.

If the chosen value for the subchannel spacing $\Delta f$ is small compared with the coherence bandwidth $B_{coh}$, and the chosen value for the symbol duration $T_{MC}$ is small compared with the coherence time $T_{cch}$ of the channel, the transfer function $H(f,t)$ of the channel can be regarded as quasi-stationary within the bandwidth $\Delta f$ of a subcarrier signal $g_k(t)$ and the duration $T_{MC}$ of a modulation symbol $S_{n,k}$. In this case, the influence of the radio channel, apart from additive noise $N(f,t)$, is confined to that each subcarrier signal is attenuated and distorted in its phase by a complex transmission parameter $\Delta H_{n,k} := H(k \cdot f, n \cdot T)$. When assuming a perfect synchronization of transmitter and receiver, the FFT thereby yields for the received modulation symbol $R_{n,k}$:

$$R_{n,k} = H_{n,k} \cdot S_{n,k} + N_{n,k},$$

wherein $N_{n,k} := N(k \cdot \Delta f, n \cdot T)$ refers to the additive noise of the channel. Assuming multipath propagation of the transmitted signal, said OFDM subchannels can be modelled by means of Rayleigh channels or, with existing line of sight (LOS) connection, by means of Rice channels. These models imply an ideal interleaving, i.e. the transmission coefficients are uncorrelated in the latter case. In comparison, if the Wide Sense Stationary Uncorrelated Scattering (WSSUS) channel model is applied, wherein channel impulse responses corresponding to the measured statistical characteristics of the relevant radio channels are generated as stochastic processes, a correlation of the transmission parameters results both in time and frequency direction.

To summarize, the transmission of signals by means of an OFDM transmission system comprises the following steps:

1. The data to be transmitted is possibly coded and assigned to corresponding modulation symbols $S_{n,k}$.

2. The sequence of the modulation symbols $S_{n,k}$ is submitted to an Inverse Fast Fourier Transform (IFFT).

3. In order to avoid ISI, each of said subcarrier signals $g_k(t)$ is supplemented by a guard interval.

Except for said modulation symbols $S_{n,k}$, pilot symbols which are possibly needed for the channel estimation and equalization must also be transmitted, dependent on the applied modulation technique. Obtained in this way, the digital baseband signal is then submitted to a D/A conversion, modulated to the carrier wave, amplified, and transmitted over the channel. In the receiver the complementary operations are applied in reverse order.

In order to assign an information to the received modulation symbols $R_{n,k}$, which are attenuated and distorted in their phase as well as impaired by additive noise, the receiver must know the complex transmission coefficients $H_{n,k}$. Demodulation techniques with said peculiarity are designated as "coherent" in technical language. Since the receiver can not ascertain the precise transmission coefficients $H_{n,k}$, though, a channel estimation must be carried out instead which provides the estimated values $\hat{H}_{n,k}$ for the transmission coefficients $H_{n,k}$. After that, the receiver can make a decision with the aid of the following evaluation:

$$\widetilde{R}_{n,k} = \frac{R_{n,k}}{\hat{H}_{n,k}} = S_{n,k} + \frac{N_{n,k}}{\hat{H}_{n,k}} \cdot$$

If the signal-to-noise ratio is high enough, the receiver is able to retrieve the transmitted modulation symbol $S_{n,k}$ by means of simple threshold value decisions from $\widetilde{R}_{n,k}$.

For a channel estimation, which is necessary for said coherent demodulation, a so-called "pilot pattern", i.e. a sequence of known modulation symbols, is regularly transmitted on several subcarriers. First of all, the receiver measures the transmission coefficients at that times and at those frequencies at which said pilot patterns were transmitted. Afterwards, an interpolation, which can preferably be realized as a filtering, yields the remaining transmission coefficients.

On the one hand, it must be considered that the transmission capacity of the system decreases due to the transmission of pilot symbols if said channel estimation is applied. On the other hand, said pilot symbols are impaired by additive noise just as the remaining modulation symbols, so that the transfer function can not exactly be determined. The more pilot symbols are available, the more precisely the transfer function can be determined, however, the more data transmission capacity is wasted.

If the WSSUS channel model is applied, the underlying assumption for the channel estimation is, that the sampling of the transfer function for the channel both in time-domain and frequency-domain is sufficiently dense according to Shannon's sampling theorem. For this purpose, the distances of the pilot symbols should be $n_t$ modulation intervals and $n_f$ subcarrier signals at the most, with $n_t$ and $n_f$ fulfilling the inequations

$$n_t \leq 1 / (2 f_{D,max} \cdot T_{MC}) \quad (1)$$

or

$$n_f \leq 1 / (2\tau_{max} \cdot \Delta f) \quad (2),$$

respectively,
in which the herein used variables are defined as follows:

$\Delta f$: bandwidth occupied by each of the equidistant subcarrier signals, subchannel spacing between different subcarrier signals,

$f_{D,max}$: maximum Doppler frequency of a transmitted signal in a radio channel on the assumption of multipath propagation,

$n_f$: number of the applied subcarrier signals,

$n_t$: number of the applied modulation symbols,

$T_{MC}$: duration of one modulation symbol, and

$\tau_{max}$: maximum time delay of a transmitted signal in a radio channel on the assumption of multipath propagation.

The interpolation can be realized by a two-dimensional filtering or by consecutive filtering in frequency and time direction. The higher the sampling rate of the transfer function is, the better the noise of the received pilot symbols can be reduced during this filtering, and the channel estimation becomes more precise.

A rough measurement of the mobile radio channel coherence time $T_{coh}$ often leads to unpredictable inaccuracies if a transmission system in environments with high-speed requirements is applied. Therefore, it is advisable to estimate the coherence time with the aid of the following formula:

$$T_{coh} \geq \frac{1}{2\pi \cdot f_D} \cdot \arccos(c),$$

wherein c is defined as the considered coherence level, and $f_D$ is the Doppler shift. For a reliable channel estimation a coherence level c of more than 0.9 should be achieved. On the assumption that the duration $T_{MC}$ of a multi-carrier symbol is much smaller than the coherence time $T_{coh}$, the channel can be deemed as quasi-stationary. If a pilot symbol is received during the confidence duration $T_{conf}$ ($T_{conf} << T_{coh}$), a valid estimation of the channel transfer function can be performed.

The following table contains calculated example parameters, wherein a multi-carrier symbol duration $T_{MC}$ of 4 $\mu$s, a carrier frequency f of 6 GHz, and a coherence level c of 0.9 were chosen. It shows that even for moderate speeds (v = 10...30 km/h) the channel coherence time $T_{coh}$ becomes rather short with respect to long data bursts as the Doppler shift $f_D$ becomes apperent, and that a degradation in the reception of long data bursts each consisting of N multi-carrier symbols of the duration $T_{MC}$ must be expected. In order to cope with the specific time variance of the mobile channel, the pilot pattern is periodically repeated with $T_{MC}$ = 4 $\mu$s, thereby yielding a pilot period comprising $N_{pp} = \lceil T_{coh} / T_{MC} \rceil$ multi-carrier symbols. The square brackets in the formula above round the value of its argument to the one higher integer value.

| Speed v [km/h] | Speed v [m/s] | Doppler Shift $f_D$ [Hz] | Coherence Time $T_{coh}$ [$\mu$s] | Pilot period $N_{pp}$ |
|---|---|---|---|---|
| 3 | 0.83 | 16.67 | 4,306.99 | 1,077 |
| 10 | 2.78 | 55.56 | 1,29.2.10 | 324 |
| 30 | 8.33 | 166.67 | 430.70 | 108 |
| 50 | 13.89 | 277.78 | 258.42 | 65 |
| 100 | 27.78 | 555.56 | 129.21 | 33 |

Owing to the above-mentioned degradation, a single-shot channel estimation (based on a single multi-carrier pilot sequence) at the beginning of each data burst is not sufficient, as the radio channel exhibits a time-variant behavior due to the mobility of the users. If the frequency range of the carrier frequency is shifted from the 6-GHz band towards higher carrier frequencies, the degradation becomes worse.

BRIEF DESCRIPTION OF THE PRESENT STATE OF THE ART

According to the state of the art, there are different solutions to the problem of pilot pattern based channel estimation and/or channel tracking available, each of them being optimized to a specific application environment given by the transmission channel, and thus inherently containing certain restrictions. These solutions are based on the High Performance Local Area Network Type 2 (HIPERLAN/2) standard, the Digital Video Broadcasting Terrestrial transmission mode (DVB-T) standard, respectively. In order to explain these solutions with regard to said standards, it is necessary to briefly describe the actions performed within the physical layer (PHY) and the Data Link Control layer (DLC).

The physical layer (PHY)

According to the HIPERLAN/2 and IEEE 802.11a standards, OFDM transmission is applied to the physical layer (PHY). In the following, the main functions of the PHY layer are briefly described. When receiving a bit sequence in the PHY layer, the following steps are performed:

1. Link adaptation: Dependent on the choice of the applied modulation technique and its code rate, different transmission rates arise. The combination of modulation and code rate enabling the DLC layer to choose an adequate mode dependent on the receive conditions is called PHY mode. In this case, for the information bits arriving at the PHY layer a link adaptation has to be performed by choosing a suitable PHY mode.

2. Scrambling: The information bits are submitted to a bit-by-bit scrambling to avoid long runs of continuous '0's or '1's, and the applied generator polynomial of the scrambling circuit is given as $S(X) := X^7 \oplus X^4 \oplus 1$, in which '$\oplus$' represents the symbol for a modulo-2 addition.

3. Forward Error Correction (FEC) coding: For the purpose of an error correction, the scrambled bits are then encoded by means of a convolutional encoder. This technique is called Forward Error Correction (FEC). At first, six bits are added to the Protocol Data Unit (PDU) train for a code termination. Thereby, the encoding of the data is done by means of a punctured convolutional encoder having a code rate of 1/2 and a constraint length of 7. The puncturing components are usually operated to result in a code rate of 3/4 or 9/16, respectively.

4. Interleaving: By means of a bit interleaving the efficiency of said convolutional encoder can be improved, and the influence of frequency-selective fading can be decreased. The block length of the applied interleaver is equal to the number of the encodable bits per OFDM symbol.

5. Mapping: According to the applied modulation technique, the interleaved bits are divided up into groups of 1, 2, 4, or 6 bits (corresponding to BPSK, QPSK, 16QAM, and 64QAM modulation, respectively), and assigned to a (normalized) complex modulation symbol $K_{mod} \cdot \underline{d}_n$, wherein $\underline{d}_n = Re\{\underline{d}_n\}+j \cdot Im\{\underline{d}_n\}$ (with $j := \sqrt{-1}$ ) is the n-th unnormalized modulation symbol, and $K_{mod}$ is a normalization factor which depends on the applied modulation technique. The complex modulation symbols formed like that are called subcarrier modulation symbols.

6. Modulation: These subcarrier modulation symbols are converted to a complex baseband signal with the aid of an OFDM modulation technique. Therefore, an Inverse Fast Fourier Transform (IFFT) is performed. Altogether, there are $N_{SD} = 48$ subcarriers for data signals and $N_{SP} = 4$ subcarriers for reference information represented by corresponding pilot symbols. Each OFDM symbol thus consists of $N_{ST} = N_{SD} + N_{SP} = 52$ subcarriers with a total length of $T_{MC} = 4.0$ $\mu$s. Further OFDM parameters can be taken from the following table:

| OFDM Transmission Parameter | Prescribed Value |
|---|---|
| sampling period $\Delta t$ | $\Delta t = 50$ ns |
| sampling rate $f_s$ | $f_s = 1 / \Delta t = 20$ MHz |
| symbol duration Ts | $T_s = 64 \cdot \Delta t = 3.2$ $\mu$s |
| guard interval $T_G$ (required I optional) | $T_G = 16 \cdot \Delta t = 0.8$ $\mu$s I <br> $T_G = 8 \cdot \Delta t = 0.4$ $\mu$s |
| symbol interval $T_{MC}$ (required I optional) | $T_{MC} = T_S + T_G = 80 \cdot \Delta t = 4.0$ $\mu$s I <br> $T_{MC} = T_S + T_G = 72 \cdot \Delta t = 3.6$ $\mu$s |
| number $N_{SD}$ of subcarriers for data signals | $N_{SD} = 48$ |
| number $N_{SP}$ of subcarriers for pilot signals | $N_{SP} = 4$ |
| total number $N_{ST}$ of subcarriers | $N_{ST} = N_{SD} + N_{SP} = 52$ |

(continued)

| OFDM Transmission Parameter | Prescribed Value |
| --- | --- |
| subchannel spacing $\Delta f$ between the individual subcarriers | $\Delta f = 1 / T_S = 0.3125$ MHz |
| subchannel spacing B between the outer subcarriers | $B = N_{ST} \cdot \Delta f = 16.25$ MHz |
| system bandwidth $B_{sys}$ | $B_{sys} = 20$ MHz |

7.PHY burst composition: By adding pilot symbols and a preamble to the signal, a so-called PHY burst is built, the data structure for the physical symbol-by-symbol information transmission on the applied subcarriers.

The Data Link Control layer (DLC)

The object of the Data Link Control layer (DLC) is to share the common used physical medium, the radio channel, among the mobile stations (MS) in a fair and efficient way. A further object of said layer is to secure the transmission against errors occuring due to the transmission over the radio channel for each single connection. For this purpose, the DLC layer is divided up into two sublayers called Medium Access Control (MAC) and Logical Link Control (LLC). In the MAC sublayer the physical channel is subdivided into time slots applying a TDMA technique. Furthermore, the MAC sublayer is responsible for assigning transmission capacity to the respective mobile stations, dependent on their specific requirements. In comparison; the LLC sublayer provides an error correction by means of an Automatic Repeat Request (ARQ) protocol.

The MAC sublayer divides the physical channel into frames of constant lengths. In the ETSI-BRAN standard a frame length of 2 ms is prescribed. When an OFDM symbol duration of 4 s is given, this corresponds to 500 OFDM symbols per frame. The frame is divided into transmission stages with different functions as can be seen in the following figure:

| | MAC Frame having a fixed length of 2 ms (= duration of 500 OFDM symbols) | | | | |
| --- | --- | --- | --- | --- | --- |
| $\cdots$ | $\leftarrow$ Broad-cast Phase | Downlink Phase | Uplink Phase | Random Access Phase $\rightarrow$ | $\cdots$ |

time t $\rightarrow$

The access to the common used physical channel is coordinated by a central instance, the Access Point (AP) or the Central Controller (CC), respectively. It dynamically assignes transmission capacity in the form of time slots. Therefore, the AP needs information about the number and the service class of the data packets in the mobile terminals (MT) waiting for being transmitted.

- In the Broadcast Phase informations concerning the capacity allocation for the current MAC frame are broadcasted to each MT, among other things.

- In the Downlink Phase user data is transmitted from the AP to each of the MT.

- In the Uplink Phase user data is transmitted from the respective MT to the AP.

- In the Random Access Phase the capacity requirements of the registered MTs as well as registration requests of still non-registered MTs are transmitted.

For the transmission of the MAC-specific PDUs in the corresponding phases, transport channels are offered by the physical layer (PHY). In subsequent MAC frames the transmission capacity of the individual channels controlled by the Broadcast Channel (BCH) and the Frame Channel (FCH) changes as required.

- Broadcast Channel (BCH): Over the BCH fundamental informations of the mobile radio cells are transmitted to each MT, for example the identification of the AP on DLC level or the current transmission power of the AP. Moreover, the BCH pointer comprises the positions of the Frame Channel (FCH) and the Random Access Channel (RCH) within the frame, and their lengths.

- Frame Channel (FCH): By means of the FCH the AP provides a table of contents of the downlink and uplink phases.

- Access Feedback Channel (ACH): With the aid of the ACH the state of the accesses to the RCH of the previous MAC frame is described. The ACH indicates the RCH time slots in which PDUs were successfully received by the AP.

- Downlink Phase: During the Downlink Phase the Long Channel (LCH) and the Short Channel (SCH) are transmitted. Over these transport channels data packets with fixed lengths are transmitted, which serve to transmit the payload and the control information of the respective MTs and their connections. These data packets are variably assigned in groups, the so-called PDU trains. Each PDU train consists of data belonging to a single MT.

- Uplink Phase: The structure of the Uplink Phase is identical with the structure of the above-described Downlink Phase.

- Random Channel (RCH): The RCH is used during the first access to the mobile network, during an handover, and for transmitting resource requests (RR). In the Random Access Phase up to 31 RCHs can be applied.

The parameters of the transport channels according to the ETSI-BRAN standard can be taken from the following table:

| Physical Channel | Direction of the transmission | Length [Byte] |
|---|---|---|
| Access Feedback Channel (ACH) | Downlink | 9 |
| Broadcast Channel (BCH) | Downlink | 15 |
| Frame Channel (FCH) | Downlink | n·27 |
| Long Transport Channel (LCH) | Down-/Uplink | 54 |
| Short Transport Channel (SCH) | Down-/Uplink | 9 |
| Random Access Channel (RCH) | Uplink | 9 |

HIPERLAN/2 background information

The HIPERLAN/2 standard defines two PHY bursts, as described above, each for the downlink and for the uplink, respectively, and an optional Direct Link burst which shall not be considered here. Thereby, the Protocol Data Unit (PDU) trains delivered by the Data Link Control layer (DLC) are mapped onto the PHY bursts as depicted below:

| Broadcast PDU train | FCH and ACH PDU train | Downlink PDU train | Uplink PDU train with short preamble | Uplink PDU train with long preamble |
|---|---|---|---|---|
| ↓ | ↓ | ↓ | ↓ | ↓ |
| Broadcast burst | Downlink burst | | Uplink burst with short preamble | Uplink burst with long preamble Direct Link burst |

The format of the herein applied PHY bursts, including said Direct Link burst, can be taken from the following figure:
a) Broadcast burst

| Section 1 | | | | | Section 2 | | | | | Section 3 | | | Payload | | |
|---|---|---|---|---|---|---|---|---|---|---|---|---|---|---|---|
| ← | | 4 µs | | → | ← | | 4 µs | | → | ← 8 µs → | | | ← $N_{ST} \cdot$ 4 µs | | → |
| A | R A | A | R | R A | B A | B | B | B | I B | CP | C | C | CP$_d$ | Data 1 | |

b) Uplink burst with long preamble Direct Link burst

| Section 2a | | | | | | | | | | Section 3 | | | Payload | | |
|---|---|---|---|---|---|---|---|---|---|---|---|---|---|---|---|
| ← | | | | 8 µs | | | | | → | ← 8 µs → | | | ← $N_{ST} \cdot$ 4 µs → | | |
| B | B | B | B | B | B | B | B | B | I B | CP | C | C | $CP_d$ | Data 1 | |

c) Uplink burst with short preamble

| Section 2 | | | | | Section 3 | | | Payload | | |
|---|---|---|---|---|---|---|---|---|---|---|
| ← | | 4 µs | | → | ← 8 µs → | | | ← $N_{ST} \cdot$ 4 µs → | | |
| B | B | B | B | I B | CP | C | C | $CP_d$ | Data 1 | |

d) Downlink burst

| Section 3 | | | Payload | | |
|---|---|---|---|---|---|
| ← 8 µs → | | | ← $N_{ST} \cdot$ 4 µs → | | |
| CP | C | C | $CP_d$ | Data 1 | |

Section 1 and 2 of the broadcast burst, as shown in the figure above, are designed for the identification of the MAC frame start, whereas section 3 is designed to be used for a channel estimation. Section 2 of the uplink burst is also.designed to enable a successful automatic gain control (AGC) adjustment for all channels. Further details can be taken from the HIPERLAN/2 specification. The data part, called payload, contains the OFDM symbols being transmitted on fixed subcarriers. Thereby, four pilot symbols are multiplexed into each payload OFDM symbol. Typically, these pilot symbols are used for frequency tracking purposes. Since they are allocated to fixed subcarriers and usually do not fulfil the sampling theorem in frequency direction, they can not be used for channel tracking.

Channel estimation in accordance with the HIPERLAN/2 standard

In HIPERLAN/2 sytems data packets are transmitted comprising a so-called preamble (which consists of OFDM symbols) followed by data OFDM symbols. If a QPSK modulation with a code rate of 3/4 is applied, the length of the total burst (comprising said preamble and said data) can, for instance, vary between 16 µs (preamble length: 8 µs, data length: 8 µs, if only one SCH is applied) and 1,928 µs (preamble length: 8 µs, data length: 1,920 µs, if 80 SCHs are applied).

The preamble field in HIPERLAN/2

In each physical burst format a so-called preamble field (P) directly preceding the data OFDM symbols is used. It consists of two identical OFDM (C-)symbols ($P_2$, $P_3$) of normal length (wherein each of the $N_{ST}$ = 52 subcarriers is in use) preceded by a long extension field called cyclic prefix (CP $\equiv P_1$) as shown in the following figure:

| Section 4 (Preamble P) | | |
|---|---|---|
| ← $T_{preamble} = 2 \cdot T_{MC} = 2 \cdot T_G + 2 \cdot T_S = 8$ µs → | | |
| CP $\equiv P_1$ (32 C-samples) | $P_2$ ($N_{ST}$ = 64 C-samples) | $P_3$ ($N_{ST}$ = 64 C-samples) |
| $2 \cdot T_G = 1.6$ µs<br>← → | $T_S = 3.2$ µs<br>← → | $T_S = 3.2$ µs<br>← → |
| ⇑ | | ⇓ |
| copy of the last half of one of the two identical P fields ($P_2$ or $P_3$) being inserted into the CP field | | |

wherein the symbol 'C' stands for "channel estimation". The subcarriers are modulated by the so-called scrambling

elements $SC_n \in \{-1, 0, +1\}$ of a modulation sequence SC given by

$$SC = \{SC_n \mid n_{min} = -26 \le n \le 26 = n_{max}\} :=$$

$$\{+1,+1,-1,-1,+1,+1,-1,+1,-1,+1,+1,+1,+1,$$
$$+1,+1,-1,-1,+1,+1,-1,+1,-1,+1,+1,+1,+1,0,$$
$$+1,-1,-1,+1,+1,-1,+1,-1,+1,-1,-1,-1,-1,$$
$$-1,+1,+1,-1,-1,+1,-1,+1,-1,+1,+1,+1,+1\}$$

having in total $N_{ST} + 1 = 53$ elements. Thereby, said extension field (CP) is composed of a cyclic repetition of said OFDM symbols ($P_2$, $P_3$) comprising a copy of the last 32 samples of one of the two OFDM symbols ($P_2$ or $P_3$). It is thus double in length compared to the cyclic prefix ($CP_d$) of normal data symbols.

The entire burst is formed by concatenating the above-described preamble ($P \equiv P_1$) with the data payload comprising the data OFDM symbols, and possibly with other preambles ($P_2$, $P_3$, ...) as depicted below:

| |
|---|
| D25 |
| D24 |
| D23 |
| D22 |
| D21 |
| D20 |
| D19 |
| D18 |
| D17 |
| D16 |
| D15 |
| D14 |
| D13 |
| D12 |
| D11 |
| D10 |
| D09 |
| D08 |
| D07 |
| D06 |
| D05 |
| D04 |
| D03 |
| D02 |
| D01 |
| D00 |
| P |

| where-in | P (m C-samples) | com-prises | P₁ (32 C-samples) | P₂ (64 C-samples) | P₃ (64 C-samples) | ... |
|---|---|---|---|---|---|---|

In the IEEE 802.11a standard a similar preamble field is used for a channel estimation.

Pilot Scrambling techniques

The scrambling of pilot patterns of any kind is applied to randomize the deterministic behavior of predefined pilots in order to minimize deterministic spectral peaks.

In HIPERLAN/2 the reference signal transmitted over the subcarriers referring to the continuous pilot pattern $C_{l,n}$ with the parameters $l$ and $n$ is defined as follows:

$$C_{l,n} := \begin{cases} +p_n & \text{for } l = -21 \\ +p_n & \text{for } l = -7 \\ +p_n & \text{for } l = +7 \\ -p_n & \text{for } l = +21 \end{cases} \text{ with } n \in \{1,2,3,\ldots\},$$

wherein p is a sequence used for randomizing the transmitted reference signal. The sequence p is defined as a pseudo-noise (PN) sequence given by

$$p' = \{p_n' \in \{-1, +1\} \mid 0 \le n \le 2^7-1 = 127\} :=$$

$$\{+1,+1,+1,+1,-1,-1,-1,+1,-1,-1,-1,-1,+1,+1,-1,+1,$$
$$-1,-1,+1,+1,-1,+1,+1,-1,+1,+1,+1,+1,+1,+1,-1,+1,$$
$$+1,+1,-1,+1,+1,-1,-1,+1,+1,+1,-1,+1,-1,-1,-1,+1,$$
$$-1,+1,-1,-1,+1,-1,-1,+1,+1,+1,+1,+1,-1,-1,+1,+1,$$
$$-1,-1,+1,-1,+1,-1,+1,+1,-1,-1,-1,+1,+1,-1,-1,-1,$$
$$-1,+1,-1,-1,+1,-1,+1,+1,+1,+1,-1,+1,-1,+1,-1,+1,$$
$$-1,-1,-1,-1,-1,+1,-1,+1,+1,-1,+1,-1,+1,+1,+1,-1,$$
$$-1,+1,-1,-1,-1,+1,+1,+1,-1,-1,-1,-1,-1,-1,-1\}.$$

Said PN sequence p can be generated by means of a Linear Feedback Shift Register (LFSR) with a generator polynomial

$$S(X) := X^7 \oplus X^4 \oplus 1$$

used for data scrambling (in which the symbol '⊕' is employed as operator for a modulo-2 addition), if the "all ones" state (1,1,1,1,1,1,1) is applied as initial state, thereby replacing all digital values '0' and '1' by the digits '+1' or '-1', respectively.

Each sequence element is used for a single OFDM symbol. The scrambler defined in that way should be initialized at the beginning of each PDU train. In this connection, it should be mentioned that the continuous pilot pattern $C_{l,n}$ is not used for a channel estimation with the purpose to equalize the channel, but e.g. for the purpose of a phase tracking.

In the demodulator the use of a cyclic prefix instead of a plain guard interval serves to simplify the channel equalization. It is also advantageous to maintain carrier synchronization in the receiver. If a cyclic prefix is employed, OFDM demodulation consists of three steps:

1. locating the starting point of an OFDM symbol, 2. separating all subcarriers by applying the Discrete Fourier Transform (DFT), and 3. mapping the received symbols into bits.

Document "Broadband Radio Access Networks (BRAN); HIPERLAN Type 2; Physical (PHY) Layer", ETSI TS 101 475 v1.2.2, 2001-02, describes the physical layer specifications for HIgh PErformance Radio Local Area Network type 2 (HIPERLAN/2). The physical layer of HIPERLAN/2 is based on the modulation scheme OFDM. Each data OFDM symbol contains data in data carriers together with reference information in pilot carriers. A data symbol contains two parts, namely a useful symbol part and a cyclic prefix. The cyclic prefix consists of a cyclic continuation of the useful part and is placed before the useful part. In HIPERLAN/2, a broadcast burst consists of a preamble followed by a payload section of N successive data OFDM symbols. The preamble starts with two sections containing different kinds of OFDM symbols, and ends with a third section consisting of two OFDM symbols (C) of normal length preceded by a cyclic prefix (CP) of the symbols, the cyclic prefix CP being a copy of the 32 last samples of the C symbols.

Document "Wireless LAN Medium Access Control (MAC) and Physical Layer (PHY) specifications", IEEE STANDARD 802.11A-1999, 1999, describes the high-speed physical layer in the 5 GHz band according to the standard IEEE 802.11a-1999 for an OFDM system. The structure of a data burst contains a first preamble field, a second signal field, and a third data field. The first preamble field is used for synchronisation and consists of ten short symbols and two long symbols. The two long symbols, which are dedicated to channel and fine frequency offset estimation, are preceded by a cyclic extension. The second signal field contains rate and length information. The third data field consists in series of OFDM symbols related to data, each OFDM symbols being preceded by a cyclic extension.

DEFICIENCIES AND DISADVANTAGES OF THE KNOWN SOLUTIONS OF THE PRESENT STATE OF THE ART

As mentioned above, each of the applied pilot pattern based channel estimation and/or channel tracking techniques is optimized to a specific purpose, and thus it contains certain limitations.

Typically, in HIPERLAN/2 no channel tracking is performed. The channel transfer function is estimated during the preamble part of the data burst, and remains fixed during the entire burst ("single-shot channel estimation") to support a coherent demodulation of the received signal. Any channel variations during the reception of the burst, for example caused by the mobility of the users, are not tracked. Therefore, a degradation of the data transmission for any time-variant channels must be expected. Additionally, as there is no update of said single-shot channel estimation, a poor quality channel estimation at the beginning reduces the reception quality of the whole burst.

The pilot pattern applied to the DVB-T standard is an optimized solution for time-variant channels. Nevertheless, a significant disadvantage of this pilot pattern is the complexity of its implementation, for example concerning the required processing power for the interpolation, and the buffers needed for storing multiple complete OFDM symbols.

The implementation complexity is also a fundamental disadvantage of pilot patterns applied to the DFE standard, likewise concerning the required processing power. For highly time-variant channels the DFE equalizer needs valid channel state information as well (as starting point), and thus a proper pilot pattern is required.

In DVB-T a pilot pattern periodically distributed in time and frequency direction allows a tracking of the channel transfer function. However, since a buffering is required with a mix of low-pass two-dimensional pilot information filtering and possibly a Decision Feedback Equilization (DFE), the employed equalizer becomes quite complicated. The application of a distributed pilot pattern scheme to HIPERLAN/2 can not be recommended as this implies that

- a channel estimation is done by two sets of interpolation filters (e.g. Wiener filters), wherein one interpolation filter serves to interpolate in the frequency direction, and one to perform interpolation in time direction, and

- the complexity is very high due to the buffering of the applied OFDM symbols in accordance with the periodicity of pilot symbols in the time direction.

Channel tracking can also be performed by applying a Decision Feedback Equalization (DFE). For HIPERLAN/2 the usage of DFE is restricted to the lower level modulation schemes (e.g. BPSK and QPSK), whereas the channel tracking is unsatisfactory for other modulation schemes (e.g. 16QAM and 64QAM). Furthermore, the usage of a DFE implies a significant increase in the complexity of the applied receiver architecture.

OBJECT OF THE UNDERLYING INVENTION

In view of the explanations mentioned above it is the object of the invention to propose a new pilot pattern technique for a high-speed wireless multi-carrier system, which allows to estimate and equalize the impairments caused by a time-variant multipath fading channel to the received signal, in order to improve the transmission quality of the system. This object is achieved by means of the features of the independent patent claims. Advantageous features are defined in the dependent patent claims.

SUMMARY OF THE INVENTION

The underlying invention describes a low-complexity and low-effort solution for a pilot pattern of a pilot-assisted high-speed wireless multi-carrier system used for supporting mobile applications within environments being severely impaired by a time-varying multipath fading behavior of the mobile radio channel. Thereby, the invention is specially optimized for extending conventional "single-shot" pilot pattern based channel estimation schemes to cope with said severe channel conditions, and can easily be realized. Additionally, the proposed scheme allows a continuous improvement of a single-shot channel estimation.

The existing preamble (or parts of said preamble) is multiplexed into the OFDM symbol stream of a associated data burst to support channel tracking in the receiver. Preferably, the already defined preamble is used, since it implies the advantage of an easy implementation without changing the existing channel estimation algorithm.

In the underlying invention the following assumptions are made as regards the OFDM system:

- The preamble (P) field contains a cyclic prefix (CP) which is used as a guard interval.

- The impulse response of the channel is shorter than the cyclic prefix (CP). Otherwise, ISI would occur caused by multipath distortions of the mobile radio channel.

- The channel noise is assumed to be additive, white and complex Gaussian.

- The fading is assumed to be slow enough for the channel to be considered constant *during one OFDM symbol* interval.

In the transmitter of the employed OFDM transmission system the following steps are performed: After the OFDM modulation, the guard interval is inserted to suppress ISI caused by multipath distortion. Said guard interval is also called cyclic prefix (CP). It comprises a copy of the last part of the OFDM symbol which is placed in front of the transmitted symbol. This makes the transmitted symbol periodic, which plays a decisive role in correctly identifying frames to avoid ISI and ICI. The price one has to pay for this advantage is a loss of signal-to-noise ratio, as the cyclic prefix is subjected to the "noisy" channel just as the signal is concerned, and by occupying signal space less power is provided for the transmission of the signal frame. After said guard interval is inserted, a filtering function is applied in order to reduce the out-of-band radiation. After that, the signal is submitted to a D/A conversion to produce the analog baseband signal, upconverted to the radio frequency (RF), and finally transmitted. The receiver of the employed OFDM transmission system performs the complementary operations in reverse order.

BRIEF DESCRIPTION OF THE CLAIMS

In general, those skilled in the art will readily recognize that the realization of the underlying invention is not restricted to the above-described examples. Many modifications and variations may be made to the embodiments of the underlying invention disclosed herein without substantially departing from the scope of the invention as defined in the following claims.

According to a first aspect of the invention a data burst structure comprising a first preamble and an OFDM symbol stream is provided, wherein the first preamble comprises a cyclic prefix for the synchronization of a transmitter and a receiver of said data burst structure, and at least one pilot symbol for performing a channel estimation, wherein at least one additional preamble is multiplexed into the OFDM symbol stream, the at least one additional preamble comprising at least one pilot symbol for performing a channel estimation.

The at least one additional preamble can be multiplexed after each N-th OFDM data symbol, in which N is defined as $2^M$, M being a positive integer value.

The at least one additional preamble can correspond to the first preamble, or alternatively can be different from the first preamble.

Each of the at least one additional preamble can comprise a plurality of pilot symbols for performing the estimation of a plurality of channels related to a plurality of transmitting antennas.

At least two additional preambles can be inserted into the OFDM symbol stream, each of the at least two additional preambles comprising at least one pilot symbol for performing a channel estimation related to a different transmitting antenna.

The cyclic prefix can comprise a part of the at least one pilot symbol.

The at least one pilot symbol of the first preamble and the at least one pilot symbol of the at least one additional preamble can be scrambled by means of a pseudo-noise scrambling sequence generated by a generator polynomial.

The data burst structure can further be adapted to enable a receiver to steadily exploit channel estimates during the reception of the data burst by weighting previously obtained channel estimates in order to reduce the effect of noise on the channel estimation.

According to a second aspect of the invention, a mobile transmitter is proposed, comprising means for generating and transmitting a signal having a data burst structure as previously defined.

According to a further aspect of the invention, a mobile receiver is provided, comprising means for receiving and demodulating a signal having a data burst structure as previously defined, and means for performing a channel estimation on the basis of the at least one pilot symbol of the at least one additional preamble of said signal.

The mobile receiver can comprise means for performing a channel equalization and can further comprise means for performing a synchronization on the basis of the cyclic prefix of said signal.

According to a further aspect of the invention a mobile transmission system is provided, said mobile transmission system comprising at least one mobile transmitter as previously defined and at least one mobile receiver as previously defined.

According to a next aspect of the invention a method for supporting wireless communication over a mobile radio channel by means of pilot-assisted wireless multi-carrier systems is proposed. Said method comprises the steps of performing an OFDM multi-carrier modulation and an OFDM multi-carrier demodulation of a signal having a data burst structure as previously defined, performing a channel estimation on the basis of the at least one pilot symbol of the at least one additional preamble of said signal.

A channel equalization can be performed. Additionally, a synchronization can be performed on the basis of the cyclic prefix of said signal.

BRIEF DESCRIPTION OF THE DRAWINGS

Further advantages and suitabilities of the underlying invention result from the subordinate claims as well as from the following description of two preferred embodiments of the invention which are depicted in the following drawings. In this case shows

FIG. 1a     the structure of the preamble field (P) used in the scope of a pilot-assisted high-speed wireless multi-carrier system in accordance with the first embodiment of the underlying invention,

FIG. 1b     the structure of an unextended OFDM symbol stream used in the scope of a pilot-assisted high-speed wireless multi-carrier system in accordance with the first embodiment of the underlying invention before multiplexing additional reference information,

FIG. 1c     the structure of an extended OFDM symbol stream used in the scope of a pilot-assisted high-speed wireless multi-carrier system in accordance with the first embodiment of the underlying invention comprising multiplexed reference information,

FIG. 2a     the structure of the preamble field (P) used in the scope of a pilot-assisted high-speed wireless multi-carrier system in accordance with the second embodiment of the underlying invention,

FIG. 2b     the structure of a modified preamble field (P') used in the scope of a pilot-assisted high-speed wireless multi-carrier system in accordance with the second embodiment of the underlying invention,

FIG. 2c     the structure of an unextended OFDM symbol stream used in the scope of a pilot-assisted high-speed wireless multi-carrier system in accordance with the second embodiment of the underlying invention before multiplexing additional reference information,

FIG. 2d     the structure of an extended OFDM symbol stream used in the scope of a pilot-assisted high-speed wireless multi-carrier system in accordance with the second embodiment of the underlying invention comprising multiplexed reference information,

FIG. 3a    the structure of the preamble field (P) used in the scope of a pilot-assisted high-speed wireless multi-carrier system in accordance with the third embodiment of the underlying invention,

FIG. 3b    the structure of a modified preamble field (P') used in the scope of a pilot-assisted high-speed wireless multi-carrier system in accordance with the third embodiment of the underlying invention,

FIG. 3c    the structure of an unextended OFDM symbol stream used in the scope of a pilot-assisted high-speed wireless multi-carrier system in accordance with the third embodiment of the underlying invention before multiplexing additional reference information being multiplied with a pilot scrambling sequence,

FIG. 3d    the structure of an extended OFDM symbol stream used in the scope of a pilot-assisted high-speed wireless multi-carrier system in accordance with the third embodiment of the underlying invention comprising multiplexed reference information being multiplied with a pilot scrambling sequence,

FIG. 4a    the structure of the preamble field (P) used in the scope of a pilot-assisted high-speed wireless multi-carrier system in accordance with the fourth embodiment of the underlying invention referring to channel estimation obtained from m different transmitting antennas,

FIG. 4b    the structure of an extended OFDM symbol stream used in the scope of a pilot-assisted high-speed wireless multi-carrier system in accordance with the fourth embodiment of the underlying invention comprising multiplexed reference information referring to subsequently multiplexing channel estimation symbols obtained from two different transmitting antennas,

FIG. 4c    the structure of an extended OFDM symbol stream used in the scope of a pilot-assisted high-speed wireless multi-carrier system in accordance with the fourth embodiment of the underlying invention comprising multiplexed reference information referring to alternatively multiplexing channel estimation symbols obtained from two different transmitting antennas,

FIG. 5a    the structure of an unextended OFDM symbol stream used in the scope of a pilot-assisted high-speed wireless multi-carrier system in accordance with the fifth embodiment of the underlying invention before multiplexing additional reference information,

FIG. 5b    the structure of an extended OFDM symbol stream used in the scope of a pilot-assisted high-speed wireless multi-carrier system in accordance with the fifth embodiment of the underlying invention comprising multiplexed reference information, wherein channel estimates are steadily exploited during the reception of the extended OFDM symbol by weighting previously obtained channel estimates in order to reduce the effect of noise on the channel estimation

FIG. 6    a block diagram for a mobile transmission system supporting wireless communication over a mobile radio channel by means of a pilot-assisted wireless multi-carrier system considering channel estimation and equalization,

FIG. 7a    a detailed view of the OFDM modulator, and

FIG. 7b    a detailed view of the OFDM demodulator.

DETAILED DESCRIPTION OF THE UNDERLYING INVENTION

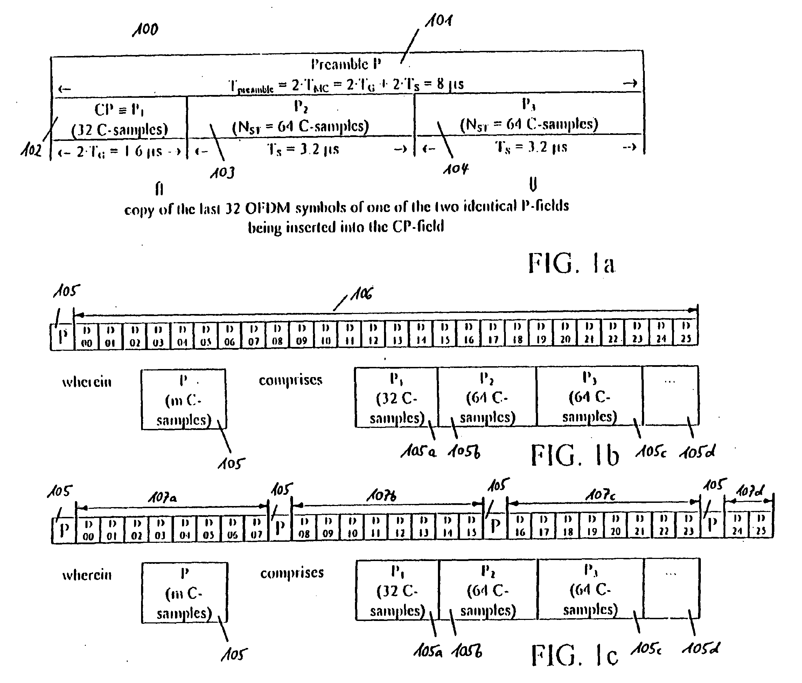

In the following the functions of the structures comprised in a first embodiment of the underlying invention as depicted in figure 1 are explained.
The solution proposed by a first preferred embodiment of the underlying invention refers to an extended OFDM symbol stream comprising data symbols 107a-d and multiplexed reference symbols 105 represented by the above-described preamble (P) field 101 as depicted in figure 1a following after each N-th OFDM data symbol $D_{k \cdot N-1}$, wherein $N := 2^M$,
$n_{max} := 26$,
$M := 1,2,3,..., \lfloor 1d\ (n_{max}-1) \rfloor$, and
$k := 1,2,3,..., \lfloor (n_{max}-1)/N \rfloor$
are chosen. Figure 1b shows the unextended OFDM symbol stream 106; the extended OFDM symbol stream 107 comprising data symbols 107a-d and multiplexed reference symbols 105 can be taken from figure 1c.

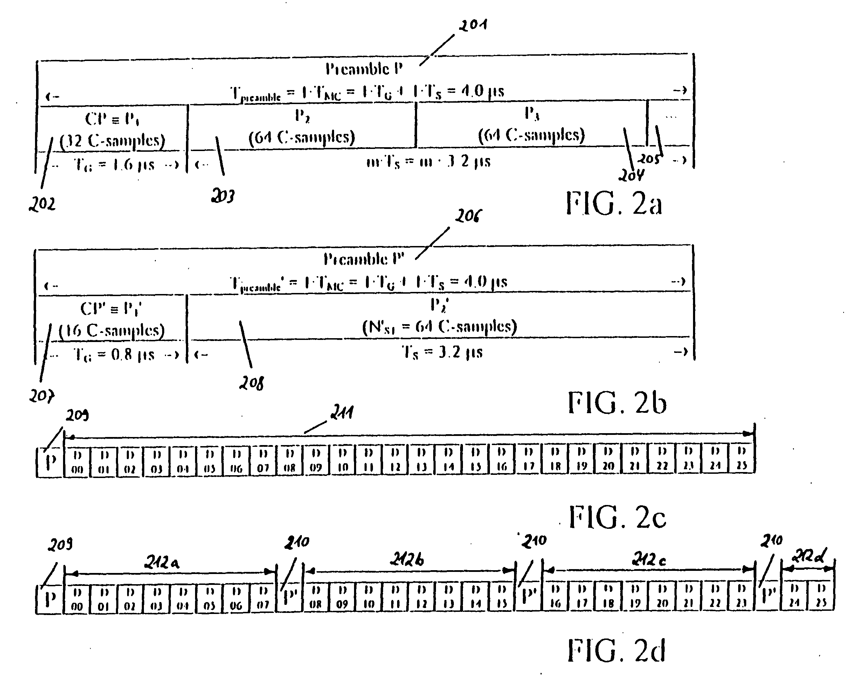

In the following the functions of the structures comprised in a second embodiment of the underlying invention as depicted in figure 2 are explained.

For the particular design of a second preferred embodiment of the underlying invention a modified preamble (P') field 206 as depicted in figure 2b is proposed having the same length

$$T_{MC} = T_G + T_S = 0.8 \ \mu s + 3.2 \ \mu s = 4.0 \ \mu s$$

as a single OFDM traffic symbol. It comprises an extension of 16 samples. Thereby, the multiplexing of the modified preamble (P') field 206 remains the same as described above for the unchanged preamble (P) field 201, which is again depicted in figure 2a. Figure 2c shows the unextended OFDM symbol stream 211; the extended OFDM symbol stream 212 comprising data symbols 212a-d and multiplexed reference symbols 209 and 210, respectively, can be seen in figure 2d.

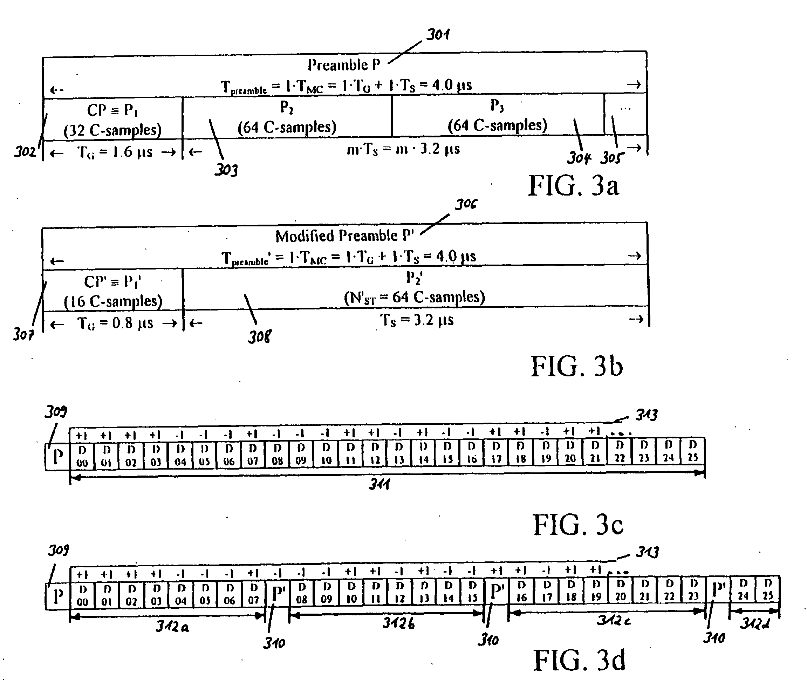

In the following the functions of the structures comprised in a third embodiment of the underlying invention as depicted in figure 3 are explained.

The main object of an applied pilot scrambling sequence is to randomize (to "whiten") the transmitted signal. In order to harmonize the multiplexing of different reference symbols as much as possible with the original specification, it is proposed to maintain said scrambling even during the transmission of the additional reference symbol. That means that from the pilot scrambler point of view the multiplexing of additional reference symbols is transparent.

For the additional reference symbols it is proposed to multiply the complete additional reference symbol (and not only the carriers at the four pilot positions) with the actual scrambling value $SC_n \in \{-1, +1\}$. Furthermore, as an additional advantage, said multiplication serves to randomize the spectrum of the signal to be transmitted. The multiplication of the additional reference symbol can either be performed in the time domain by multiplying the complex samples with either '+1' or '-1', or in the frequency (subcarrier) domain by multiplying the complex subcarrier information of the additional reference symbol information with either '+1' or '-1' as shown in the figures 3c and 3d, respectively. Figure 3a shows again the structure of the unchanged preamble (P) field 301, whereas figure 3b exhibits the structure of the modified preamble (P') field 306. Likewise, the other components 309-312d depicted in the figures 3b and 3c are identical with the above-described components 209-212d depicted in the figures 2b and 2c.

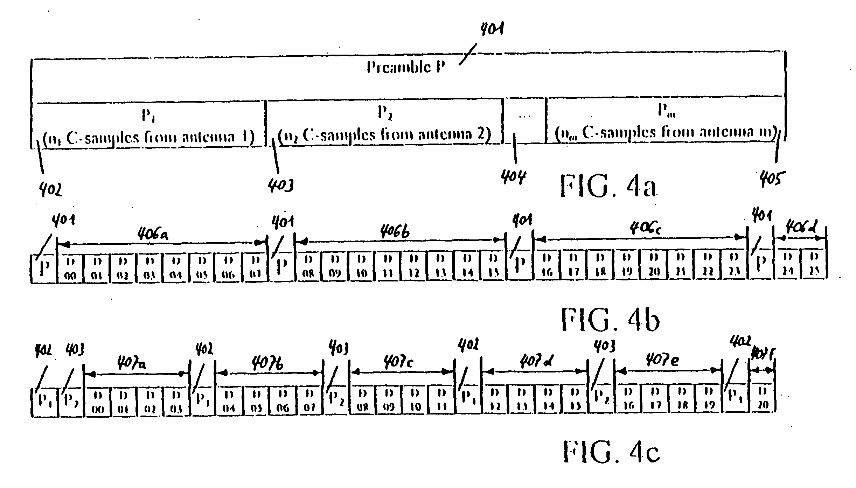

In the following the functions of the structures comprised in a fourth embodiment of the underlying invention as depicted in figure 4 are explained.

If multiple transmitting antennas are employed, channel estimation is needed for each separate transmitting antenna. This is applicable to schemes like Space-Time Block Coding (STC), which uses multiple transmitting antennas. In this case, the reference information represented by an individual preamble 402-405 (= $P_\mu$, wherein $1 \leq \mu \leq m$) for each antenna $\mu$ as shown in figure 4a is consecutively multiplexed into the OFDM symbol stream 406a-d. In figures 4b and 4c examples with two transmitting antennas each (m := 2) are depicted. In figure 4b the symbol 'P' refers to the sequence of channel estimation information $(P_1...P_\mu...P_m)$ obtained from each of the m antennas. An other multiplexing option is, for instance, alternatively multiplexing channel estimation symbols from one or the other transmitting antenna into the OFDM symbol stream 407a-f as shown in figure 4c.

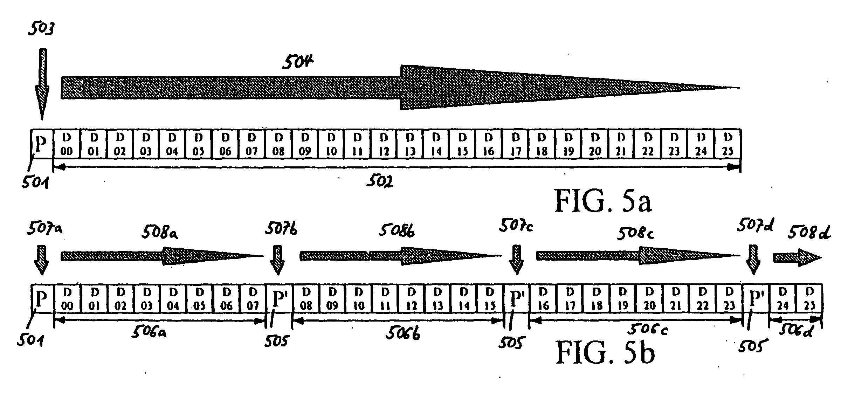

In the following the functions of the structures comprised in a fifth embodiment of the underlying invention as depicted in figure 5 are explained.

In a fifth embodiment of the underlying invention channel estimates 507a-d are steadily exploited during the reception of the extended OFDM symbol stream comprising data symbols 508a-d and multiplexed reference symbols 501 and 505, respectively, by weighting previously obtained channel estimates 507a-d in order to reduce the effect of noise on the channel estimation. The employed weights are typically powers of a number within the range of 0 to 1. For example, the total channel estimation $H_{total}(t)$ exploited at the discrete time t=4 yields

$$H_{total}(t=4) = a^0 \cdot H(t=4) + a^1 \cdot H(t=3) + a^2 \cdot H(t=2)$$
$$+ a^3 \cdot H(t=1) + a^4 \cdot H(t=0)$$

with the weight factor a : = 0.8.

In the example above $H_{total}(t=4)$ is used during 508d, H(t=4) is based on 507d, H(t=3) is based on 507c, H(t=2) is based on 507b, and H(t=1) is based on 507a.

In a more sophisticated version the total channel estimation $H_{total}(t)$ exploited at the discrete time t=3 yields

$$H_{total}(t=3) = 1/(1+a+b+c) \cdot [H(t=3)+a \cdot H(t=2)+b \cdot H(t=1)+c \cdot H(t=0)]$$

with the weight factors $a,b,c \in [0;1]$

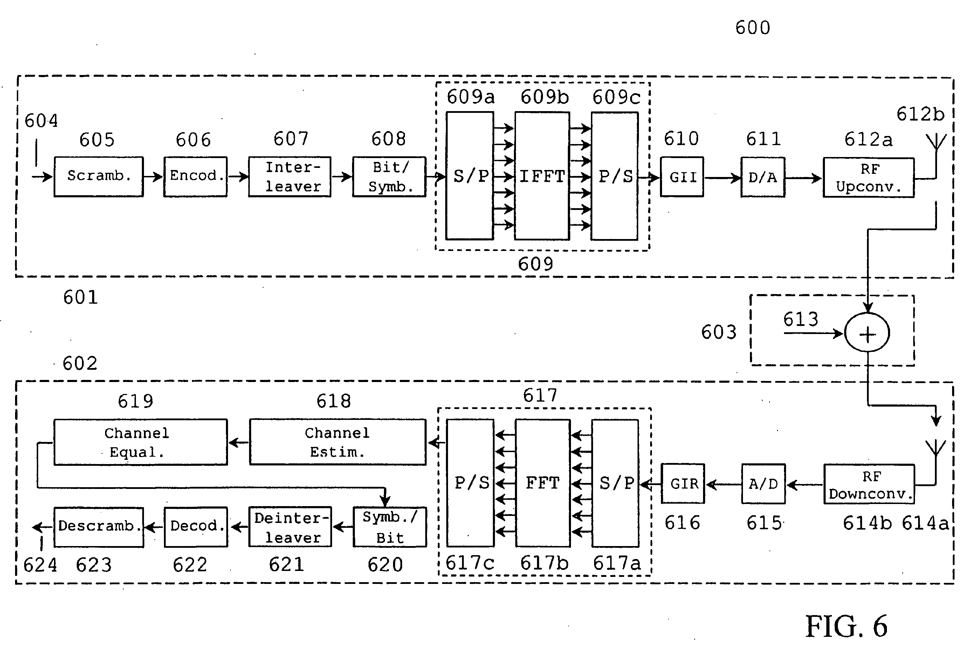

Figure 6 refers to a block diagram for the employed mobile transmission system comprising one transmitter 601 and one receiver 602 for supporting wireless communication over a mobile radio channel by means of a pilot-assisted wireless multi-carrier system considering channel estimation and equalization.

The input is a binary data stream 604. At first, a scrambler 605 is used for randomizing the transmitted input data bits 604. After being submitted to an encoder 606 and an interleaver 607 followed by a bit-to-symbol mapper 608, the data is then transformed into a multilevel signal to be prepared for an OFDM modulation 609. When the serial data stream is converted to parallel by means of the serial-parallel converter 609a, the data rate gets reduced by N, where N is the number of parallel subchannels used for the applied OFDM modulation. Hence, these parallel channels are essentially low data rate channels, and since they are narrow-band channels they experience flat fading. This is the greatest advantage of the applied OFDM technique. To obtain orthogonality between the subcarriers, the data symbols are mapped to the subcarriers using an Inverse Fast Fourier Transform (IFFT) performed by a digital signal processor 609b, and reconverted to serial by means of a parallel-serial converter 609c. After OFDM modulation a guard interval is inserted with the aid of the guard interval insertion unit 610. The use of a cyclic prefix (CP) instead of a plain guard interval simplifies the channel equalization in the receiver. Moreover, it is advantageous to maintain carrier synchronization in the receiver. Next, a signal filtering is performed in order to reduce the out-of-band radiation. Therefore, a raised-cosine window function can be employed. The signal is then submitted to a digital-analog converter 611 to produce the analog baseband signal, modulated to the RF carrier wave by means of an RF upconversion unit 612a, amplified, and transmitted over the mobile radio channel 603. Thereby, the mobile radio channel 603 is assumed to be an Additive White Gaussian Noise (AWGN) channel. In the receiver the complementary operations are applied in reverse order. At first, the received RF signal is downconverted to the baseband by means of the RF downconverter 614b, and submitted to an analog-digital converter 615. When the guard interval is removed with the aid of the guard interval removal unit 616, the OFDM demodulation 617 can be performed. The data is then transformed into a multilevel signal to be prepared for an OFDM demodulation. After the serial data stream is converted to parallel by means of the serial-parallel converter 617a, all subcarriers are separated by applying a Fast Fourier Transform (FFT) performed by a digital signal processor 617b, and reconverted to serial by means of a parallel-serial converter 617c. After the performance of the channel estimation 618 and equalization 619, the data stream is submitted to a symbol-to-bit demapper 620 followed by a deinterleaver 621, a decoder 622, and a descrambler 623 to obtain the output data bits 624.

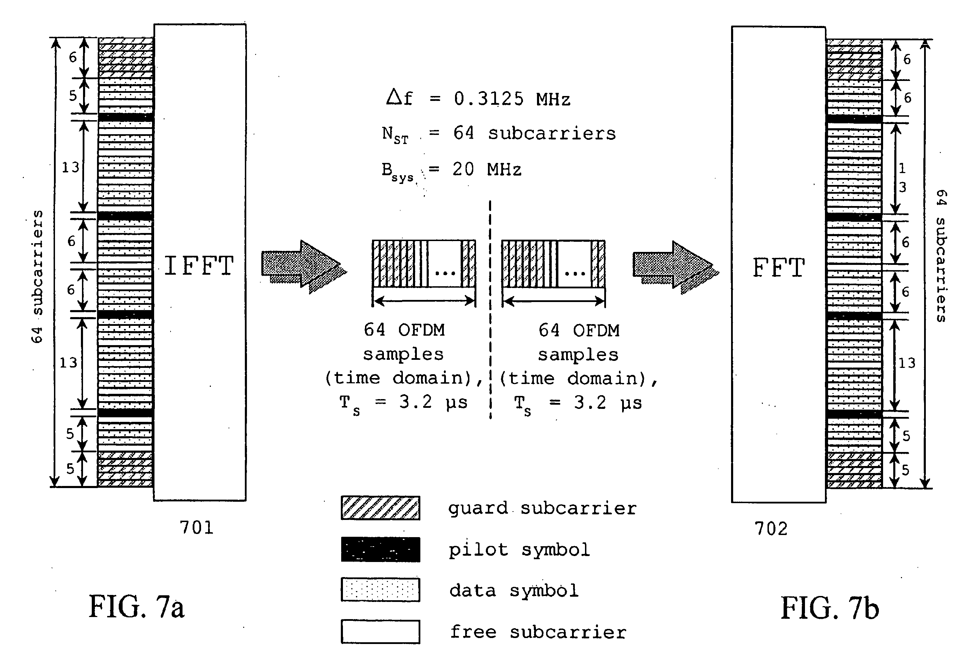

Figure 7 exhibits a detailed view of the OFDM modulation 701 performed in the transmitter with multiplexing data symbols and pilot symbols, and the OFDM demodulation 702 performed in the receiver. Thereby, the data is modulated on $N_{ST}$ = 64 subcarriers by means of an Inverse Fast Fourier Transform (IFFT) in the transmitter, and demodulated by means of a Fast Fourier Transform (FFT) in the receiver.

The significance of the symbols designated with reference signs in the figures 1 to 7 can be taken from the appended table of reference signs.

Table of the depicted features and their corresponding reference signs

| No. | Feature |
|---|---|
| 100 | pilot pattern frame transmitted by means of associated pilot subcarrier patterns |
| 101 | preamble (P) field in accordance with the first embodiment of the underlying invention |
| 102 | first preamble section ($P_1$) of the preamble field 101 comprising a cyclic prefix (CP) including the last 32 samples of one of the two identical P-fields 103 or 104 in accordance with the first embodiment of the underlying invention |
| 103 | second preamble section ($P_2$) of the preamble field 101 comprising 64 OFDM (C-) samples in accordance with the first embodiment of the underlying invention |
| 104 | third preamble section ($P_3$) of the preamble field 101 comprising 64 OFDM (C-) samples in accordance with the first embodiment of the underlying invention |
| 105 | preamble (P) field preceding the OFDM data stream in accordance with the first embodiment of the underlying invention |

(continued)

| No. | Feature |
|---|---|
| 105a | first preamble section ($P_1$) of the preamble field 105 comprising a cyclic prefix (CP) including the last 32 samples of one of the two identical P-fields 103 or 104 (cf. 102) in accordance with the first embodiment of the underlying invention |
| 105b | second preamble section ($P_2$) of the preamble field 105 comprising 64 OFDM (C-) samples in accordance with the first embodiment of the underlying invention |
| 105c | third preamble section ($P_3$) of the preamble field 105 comprising 64 OFDM (C-)samples in accordance with the first embodiment of the underlying invention |
| 105d | further preamble sections ($P_4$,...,$P_m$) of the preamble field 105 comprising 64 OFDM (C-)samples each in accordance with the first embodiment of the underlying invention |
| 106 | OFDM data stream comprising 26 OFDM data symbols (D01 to D25) in accordance with the first embodiment of the underlying invention |
| 107a | first octet of the OFDM data stream 106 in accordance with the first embodiment of the underlying invention |
| 107b | second octet of the OFDM data stream 106 in accordance with the first embodiment of the underlying invention |
| 107c | third octet of the OFDM data stream 106 in accordance with the first embodiment of the underlying invention |
| 107d | remaining symbols of the OFDM data stream 106 in accordance with the first embodiment of the underlying invention |
| 201 | preamble (P) field in accordance with the second embodiment of the underlying invention |
| 202 | first preamble section ($P_1$) of the preamble field 201 comprising a cyclic prefix (CP) including the last 32 samples of one of the identical P-fields 203 to 205 in accordance with the second embodiment of the underlying invention |
| 203 | second preamble section ($P_2$) of the preamble field 201 comprising 64 OFDM (C-) samples in accordance with the second embodiment of the underlying invention |
| 204 | third preamble section ($P_3$) of the preamble field 201 comprising 64 OFDM (C-)samples in accordance with the second embodiment of the underlying invention |
| 205 | further preamble sections ($P_4$,...,$P_m$) of the preamble field 201 comprising 64 OFDM (C-)samples each in accordance with the second embodiment of the underlying invention |
| 206 | modified preamble (P') field in accordance with the second embodiment of the underlying invention |
| 207 | first preamble section ($P_1$') of the modified preamble field 206 comprising a modified cyclic prefix (CP') in accordance with the second embodiment of the underlying invention |
| 208 | second preamble section ($P_2$') of the modified preamble field 206 comprising 64 OFDM (C-)samples in accordance with the second embodiment of the underlying invention |
| 209 | preamble (P) field preceding the OFDM data stream in accordance with the second embodiment of the underlying invention |
| 210 | modified preamble (P') field multiplexed into the OFDM data stream in accordance with the second embodiment of the underlying invention |
| 211 | OFDM data stream comprising 26 OFDM data symbols (D01 to D25) in accordance with the second embodiment of the underlying invention |

(continued)

| No. | Feature |
|---|---|
| 212a | first octet of the OFDM data stream 211 with multiplexed reference information in accordance with the second embodiment of the underlying invention |
| 212b | second octet of the OFDM data stream 211 with multiplexed reference information in accordance with the second embodiment of the underlying invention |
| 212c | third octet of the OFDM data stream 211 with multiplexed reference information in accordance with the second embodiment of the underlying invention |
| 212d | remaining symbols of the OFDM data stream 211 with multiplexed reference information in accordance with the second embodiment of the underlying invention |
| 301 | preamble (P) field in accordance with the third embodiment of the underlying invention |
| 302 | first preamble section ($P_1$) of the preamble field 201 comprising a cyclic prefix (CP) including the last 32 samples of one of the identical P-fields 303 to 305 in accordance with the third embodiment of the underlying invention |
| 303 | second preamble section ($P_2$) of the preamble field 201 comprising 64 OFDM (C-) samples in accordance with the third embodiment of the underlying invention |
| 304 | third preamble section ($P_3$) of the preamble field 201 comprising 64 OFDM (C-)samples in accordance with the third embodiment of the underlying invention |
| 305 | further preamble sections ($P_4,...,P_m$) of the preamble field 201 comprising 64 OFDM (C-)samples each in accordance with the third embodiment of the underlying invention |
| 306 | modified preamble (P') field in accordance with the third embodiment of the underlying invention |
| 307 | first preamble section ($P_1'$) of the modified preamble field 206 comprising a modified cyclic prefix (CP') in accordance with the third embodiment of the underlying invention |
| 308 | second preamble section ($P_2'$) of the modified preamble field 206 comprising 64 OFDM (C-)samples in accordance with the third embodiment of the underlying invention |
| 309 | preamble (P) field preceding the OFDM data stream in accordance with the third embodiment of the underlying invention |
| 310 | modified preamble (P') field multiplexed into the OFDM data stream in accordance with the third embodiment of the underlying invention |
| 311 | OFDM data stream comprising 26 OFDM data symbols (D01 to D25) in accordance with the third embodiment of the underlying invention |
| 312a | first octet of the OFDM data stream 311 with multiplexed reference information in accordance with the third embodiment of the underlying invention |
| 312b | second octet of the OFDM data stream 311 with multiplexed reference information in accordance with the third embodiment of the underlying invention |
| 312c | third octet of the OFDM data stream 311 with multiplexed reference information in accordance with the third embodiment of the underlying invention |
| 312d | remaining symbols of the OFDM data stream 311 with multiplexed reference information in accordance with the third embodiment of the underlying invention |
| 313 | pilot scrambling sequence (SC) in accordance with the third embodiment of the underlying invention |
| 401 | preamble (P) field in accordance with the fourth embodiment of the underlying invention |
| 402 | first preamble section ($P_1$) of the preamble field 401 comprising $n_1$ OFDM (C-) samples received from the first antenna in accordance with the fourth embodiment of the underlying invention |

(continued)

| No. | Feature |
|---|---|
| 403 | second preamble section ($P_2$) of the preamble field 401 comprising $n_2$ OFDM (C-) samples received from the second antenna in accordance with the fourth embodiment of the underlying invention |
| 404 | further preamble sections ($P_3,...,P_m$) of the preamble field 401 comprising $n_3,...,n_m$ OFDM (C-)samples each, respectively, received from further antennas in accordance with the fourth embodiment of the underlying invention |
| 405 | m-th preamble section ($P_m$) of the preamble field 401 comprising $n_m$ OFDM (C-) samples received from the m-th antenna in accordance with the fourth embodiment of the underlying invention |
| 406a | first octet of an OFDM data stream with multiplexed reference information in accordance with the fourth embodiment of the underlying invention |
| 406b | second octet of an OFDM data stream with multiplexed reference information in accordance with the fourth embodiment of the underlying invention |
| 406c | third octet of an OFDM data stream with multiplexed reference information in accordance with the fourth embodiment of the underlying invention |
| 406d | remaining symbols of an OFDM data stream with multiplexed reference information in accordance with the fourth embodiment of the underlying invention |
| 407a | first quartet of an OFDM data stream with multiplexed reference information in accordance with the fourth embodiment of the underlying invention |
| 407b | second quartet of an OFDM data stream with multiplexed reference information in accordance with the fourth embodiment of the underlying invention |
| 407c | third quartet of an OFDM data stream with multiplexed reference information in accordance with the fourth embodiment of the underlying invention |
| 407d | fourth quartet of an OFDM data stream with multiplexed reference information in accordance with the fourth embodiment of the underlying invention |
| 407e | fifth quartet of an OFDM data stream with multiplexed reference information in accordance with the fourth embodiment of the underlying invention |
| 407f | remaining symbols of an OFDM data stream with multiplexed reference information in accordance with the fourth embodiment of the underlying invention |
| 501 | preamble (P) field in accordance with the fifth embodiment of the underlying invention |
| 502 | OFDM data stream comprising 26 OFDM data symbols (D01 to D25) in accordance with the fifth embodiment of the underlying invention |
| 503 | "single-shot" channel estimation based on the preamble (P) field 501 used for the reception of the entire burst 504 in accordance with the fifth embodiment of the underlying invention |
| 504 | range of application for said "single-shot" channel estimation 503 |
| 505 | modified preamble (P') field in accordance with the fifth embodiment.of the underlying invention |
| 506a | first octet of the OFDM data stream 502 with multiplexed reference information in accordance with the fifth embodiment of the underlying invention |
| 506b | second octet of the OFDM data stream 502 with multiplexed reference information in accordance with the fifth embodiment of the underlying invention |
| 506c | third octet of the OFDM data stream 502 with multiplexed reference information in accordance with the fifth embodiment of the underlying invention |

(continued)

| No. | Feature |
|---|---|
| 506d | remaining symbols of the OFDM data stream 502 with multiplexed reference information in accordance with the fifth embodiment of the underlying invention |
| 507a | performance of a first channel estimation in accordance with the fifth embodiment of the underlying invention |
| 507b | performance of a second channel estimation in accordance with the fifth embodiment of the underlying invention |
| 507c | performance of a third channel estimation in accordance with the fifth embodiment of the underlying invention |
| 507d | performance of a fourth channel estimation in accordance with the fifth embodiment of the underlying invention |
| 508a | range of application for said first channel estimation 507a in accordance with the fifth embodiment of the underlying invention |
| 508b | range of application for said second channel estimation 507b in accordance with the fifth embodiment of the underlying invention |
| 508c | range of application for said third channel estimation 507c in accordance with the fifth embodiment of the underlying invention |
| 508d | range of application for said fourth channel estimation 507d in accordance with the fifth embodiment of the underlying invention |
| 600 | block diagram for a mobile transmission system supporting wireless communication over a mobile radio channel by means of a pilot-assisted wireless multi-carrier system considering channel estimation and equalization |
| 601 | transmitter of said mobile transmission system 600 |
| 602 | receiver of said mobile transmission system 600 |
| 603 | Multipath fading channel with AWGN, characterized by a severe frequency-selective fading and a time-variant behavior |
| 604 | input data bits |
| 605 | scrambler used for randomizing the deterministic behavior of predefined pilots in order to minimize interferences |
| 606 | encoder (e.g. a convolutional encoder) |
| 607 | interleaver |
| 608 | bit-to-symbol mapper |
| 609 | OFDM modulator |
| 609a | serial-parallel (S/P) converter |
| 609b | digital signal processor performing an Inverse Fast Fourier Transform (IFFT) |
| 609c | parallel-serial (P/S) converter |
| 610 | guard interval insertion (GII) and windowing in order to reduce the out-of-band radiation |
| 611 | digital-to-analog (D/A) converter |
| 612a | RF upconversion unit |
| 612b | transmitting antenna |
| 613 | additive noise |
| 614a | receiving antenna |
| 614b | RF downconversion unit |

(continued)

| No. | Feature |
| --- | --- |
| 615 | analog-to-digital (A/D) converter |
| 616 | guard interval removal (GIR) and windowing in order to reduce the out-of-band radiation |
| 617 | OFDM demodulator |
| 617a | serial-parallel (S/P) converter |
| 617b | digital signal processor performing a Fast Fourier Transform (FFT) |
| 617c | parallel-serial (P/S) converter |
| 618 | channel estimator |
| 619 | channel equalizator |
| 620 | symbol-to-bit demapper |
| 621 | deinterleaver |
| 622 | decoder (e.g. a convolutional decoder) |
| 623 | descrambler |
| 624 | output data bits |
| 701 | detailed view of the OFDM modulator 609 |
| 702 | detailed view of the OFDM demodulator 617 |

**Claims**

1. A data burst structure
   comprising a first preamble (209) and an OFDM symbol stream (211),
   wherein the first preamble (209) comprises

   - a cyclic prefix (202) for the synchronization of a transmitter (601) and a receiver (602) of said data burst structure, and
   - at least one pilot symbol (203, 204) for performing a channel estimation,

   **characterized by** comprising
   at least one additional preamble (210) in the OFDM symbol stream (211), the at least one additional preamble (210) comprising at least one pilot symbol (208) for performing a channel estimation.

2. A data burst structure according to claim 1,
   comprising the at least one additional preamble (210) after each N-th OFDM data symbol, in which N is defined as $2^M$, M being a positive integer value.

3. A data burst structure according to claim 1 or 2,
   wherein the at least one additional preamble (210) corresponds to the first preamble (209).

4. A data burst structure according to claim 1 or 2,
   wherein the at least one additional preamble (210) is different from the first preamble (209).

5. A data burst structure according to claim 1 or 2,
   wherein each of the at least one additional preamble (210) comprises a plurality of pilot symbols (402, 403) for performing the estimation of a plurality of channels related to a plurality of transmitting antennas.

6. A data burst structure according to claim 1 or 2,
   wherein at least two additional preambles (210)are inserted into the OFDM symbol stream (211), each of the at least two additional preambles (210) comprising at least one pilot symbol (402, 403) for performing a channel estimation related to a different transmitting antenna.

7.  A data burst structure according to any of the preceding claims,
    wherein the cyclic prefix (202) comprises a part of the at least one pilot symbol (203, 204).

8.  A data burst structure according to any of the preceding claims,
    wherein the at least one pilot symbol (203, 204) of the first preamble (209) and the at least one pilot symbol (208) of the at least one additional preamble (210) are scrambled by means of a pseudo-noise scrambling sequence generated by a generator polynomial.

9.  A data burst structure according to any of the preceding claims,
    and adapted to enable a receiver to steadily exploit channel estimates during the reception of the data burst by weighting previously obtained channel estimates in order to reduce the effect of noise on the channel estimation.

10. A mobile transmitter,
    comprising means (609, 612b) for generating and transmitting a signal having a data burst structure according to any of the claims 1 to 9.

11. A mobile receiver,
    comprising

    - means (614a, 617) for receiving and demodulating a signal having a data burst structure according to any of the claims 1 to 9, and
    - means (618) for performing a channel estimation on the basis of the at least one pilot symbol (208) of the at least one additional preamble (210) of said signal.

12. A mobile receiver according to claim 11,
    comprising means (619) for performing a channel equalization.

13. A mobile receiver according to claim 11 or 12,
    comprising means for performing a synchronization on the basis of the cyclic prefix (202) of said signal.

14. A mobile transmission system comprising at least one mobile transmitter (601) according to claim 10 and at least one mobile receiver (602) according to any of the claims 11 to 13.

15. A method for supporting wireless communication over a mobile radio channel (603) by means of pilot-assisted wireless multi-carrier systems, comprising the steps of:

    - performing an OFDM multi-carrier modulation (609) and an OFDM multi-carrier demodulation (617) of a signal having a data burst structure according to any of claims 1 to 9,
    - performing a channel estimation (618) on the basis of the at least one pilot symbol (208) of the at least one additional preamble (210) of said signal.

16. A method according to claim 15,
    wherein a channel equalization is performed.

17. A method according to claim 15 or 16,
    wherein a synchronization is performed on the basis of the cyclic prefix (202) of said signal.

**Patentansprüche**

1.  Datenburststruktur, welche eine erste Präambel (209) und einen OFDM-Symbolstrom aufweist, wobei die erste Präambel (209) aufweist:

    ein zyklisches Präfix (202) zur Synchronisation eines Übertragers (601) und eines Empfängers (602) der Datenburststruktur, und

zumindest ein Pilotsymbol (203, 204) zum Durchführen einer Kanalschätzung, **dadurch gekennzeichnet, dass** sie aufweist:

> zumindest eine zusätzliche Präambel (210) im OFDM-Symbolstrom (211), wobei die zumindest eine zusätzliche Präambel (210) zumindest ein Pilotsymbol (208) zum Durchführen einer Kanalschätzung aufweist.

2. Datenburststruktur nach Anspruch 1, welche die zumindest eine zusätzliche Präambel (210) nach jedem N-ten OFDM-Datensymbol aufweist, wobei N definiert ist als $2^M$, wobei M ein positiver ganzzahliger Wert ist.

3. Datenburststruktur nach Anspruch 1 oder 2, wobei die zumindest eine zusätzliche Präambel (210) der ersten Präambel (209) entspricht.

4. Datenburststruktur nach Anspruch 1 oder 2, wobei die zumindest eine zusätzliche Präambel (210) gegenüber der ersten Präambel (209) verschieden ist.

5. Datenburststruktur nach Anspruch 1 oder 2, wobei jede der zumindest einen zusätzlichen Präambel (210) mehrere Pilotsymbole (402, 403) aufweist, um die Schätzung von mehreren Kanälen in Bezug auf mehrere Übertragungsantennen durchzuführen.

6. Datenburststruktur nach Anspruch 1 oder 2, wobei zumindest zwei zusätzliche Präambeln (210) in den OFDM-Symbolstrom (211) eingefügt sind, wobei jede der zumindest beiden zusätzlichen Präambeln (210) zumindest ein Pilotsymbol (402, 403) zum Durchführen einer Kanalschätzung in Bezug auf eine andere Übertragungsantenne aufweist.

7. Datenburststruktur nach einem der vorhergehenden Ansprüche, wobei das zyklische Präfix (202) ein Teil des zumindest einen Pilotsymbols (203, 204) aufweist.

8. Datenburststruktur nach einem der vorhergehenden Ansprüche, wobei das zumindest eine Pilotsymbol (203, 204) der ersten Präambel (209) und das zumindest eine Pilotsymbol (208) der zumindest einen zusätzlichen Präambel (210) mittels einer Pseudorausch-Verschachtelungssequenz, welche durch ein Erzeugerpolynom erzeugt wird, verschachtelt sind.

9. Datenburststruktur nach einem der vorhergehenden Ansprüche und eingerichtet, es einem Empfänger zu ermöglichen, Kanalschätzungen während des Empfangs des Datenbursts stabil auszuwerten, wobei vorher erlangte Kanalschätzungen gewichtet werden, um den Effekt von Rauschen in Bezug auf die Kanalschätzung zu reduzieren.

10. Mobil-Übertrager,
der eine Einrichtung (609, 612b) aufweist, um ein Signal zu erzeugen und zu übertragen, welches eine Datenburststruktur, gemäß einem der Ansprüche 1 bis 9 aufweist.

11. Mobil-Empfänger,
der aufweist:

> eine Einrichtung (614a, 617) zum Empfangen und Demodulieren eines Signals, welches eine Datenburststruktur, nach einem der Ansprüche 1 bis 9 hat, und
> eine Einrichtung (618) zum Durchführen einer Kanalschätzung auf Basis des zumindest einen Pilotsymbols (208) der zumindest einen zusätzlichen Präambel (210) des Signals.

12. Mobil-Empfänger nach Anspruch 11, der eine Einrichtung (619) zum Durchführen einer Kanalentzerrung aufweist.

13. Mobil-Empfänger nach Anspruch 11 oder 12, der eine Einrichtung zum Durchführen einer Synchronisation auf Basis des zyklischen Präfix (202) des Signals aufweist.

14. Mobil-Übertragungssystem, welches zumindest einen Mobil-Übertrager (601) gemäß Anspruch 10 und zumindest einen Mobil-Empfänger (602) gemäß einem der Ansprüche 11 bis 13 aufweist.

15. Verfahren zum Unterstützen drahtloser Kommunikation über einen Mobil-Funkkanal (603) mittels pilot-unterstützter Drahtlosmultiträgersysteme, welches folgende Schritte aufweist:

Durchführen einer OFDM-Multiträgermodulation (609) und einer OFDM-Multiträgerdemodulation (617) eines Signals, welches eine Datenburststruktur, nach einem der Ansprüche 1 bis 9 hat,
Durchführen einer Kanalschätzung (618) auf Basis des zumindest einen Pilotsymbols (208) der zumindest einen zusätzlichen Präambel (210) des Signals.

**16.** Verfahren nach Anspruch 15, wobei eine Kanalentzerrung durchgeführt wird.

**17.** Verfahren nach Anspruch 15 oder 16, wobei eine Synchronisation auf Basis des zyklischen Präfix (202) des Signals durchgeführt wird.

**Revendications**

**1.** Structure de salves de données comprenant un premier préambule (209) et un train de symboles OFDM (211), dans lequel le premier préambule (209) comprend :

- un préfixe cyclique (202) pour la synchronisation d'un émetteur (601) et d'un récepteur (602) de ladite structure de salves de données ; et
- au moins un symbole de pilote (203, 204) pour réaliser une estimation de canal,

**caractérisée en ce qu'**elle comprend au moins un préambule additionnel (210) dans le train de symboles OFDM (211), l'au moins un préambule additionnel (210) comprenant au moins un symbole de pilote (208) pour réaliser une estimation de canal.

**2.** Structure de salves de données selon la revendication 1, comprenant l'au moins un préambule additionnel (210) après chaque N-ième symbole de données OFDM, où N est défini en tant que $2^M$, M étant une valeur entière positive.

**3.** Structure de salves de données selon la revendication 1 ou 2, dans laquelle l'au moins un préambule additionnel (210) correspond au premier préambule (209).

**4.** Structure de salves de données selon la revendication 1 ou 2, dans laquelle l'au moins un préambule additionnel (210) est différent du premier préambule (209).

**5.** Structure de salves de données selon la revendication 1 ou 2, dans laquelle chacun des au moins un préambule additionnel (210) comprend une pluralité de symboles de pilote (402, 403) pour réaliser l'estimation d'une pluralité de canaux rapportés à une pluralité d'antennes d'émission.

**6.** Structure de salves de données selon la revendication 1 ou 2, dans laquelle au moins deux préambules additionnels (210) sont insérés dans le train de symboles OFDM (211), chacun des au moins deux préambules additionnels (210) comprenant au moins un symbole de pilote (402, 403) pour réaliser une estimation de canal rapportée à une antenne d'émission différente.

**7.** Structure de salves de données selon l'une quelconque des revendications précédentes, dans laquelle le préfixe cyclique (202) comprend une partie de l'au moins un symbole de pilote (203, 204).

**8.** Structure de salves de données selon l'une quelconque des revendications précédentes, dans laquelle l'au moins un symbole de pilote (203, 204) du premier préambule (209) et l'au moins un symbole de pilote (208) de l'au moins un préambule additionnel (210) sont brouillés au moyen d'une séquence de brouillage de pseudo-bruit qui est générée par un polynôme de générateur.

**9.** Structure de salves de données selon l'une quelconque des revendications précédentes, adaptée pour permettre qu'un récepteur exploite en régime établi des estimations de canal pendant la réception de la salve de données en pondérant des estimations de canal obtenues au préalable afin de réduire l'effet du bruit sur l'estimation de canal.

**10.** Emetteur de mobile comprenant un moyen (609, 612b) pour générer et émettre un signal présentant une structure de salves de données selon l'une quelconque des revendications 1 à 9.

**11.** Récepteur de mobile comprenant :

- un moyen (614a, 617) pour recevoir et démoduler un signal qui présente une structure de salves de données selon l'une quelconque des revendications 1 à 9 ; et
- un moyen (618) pour réaliser une estimation de canal sur la base de l'au moins un symbole de pilote (208) de l'au moins un préambule additionnel (210) dudit signal.

**12.** Récepteur de mobile selon la revendication 11, comprenant un moyen (619) pour réaliser une égalisation de canal.

**13.** Récepteur de mobile selon la revendication 11 ou 12, comprenant un moyen pour réaliser une synchronisation sur la base du préfixe cyclique (202) dudit signal.

**14.** Système de transmission de mobile comprenant au moins un émetteur de mobile (601) selon la revendication 10 et au moins un récepteur de mobile (602) selon l'une quelconque des revendications 11 à 13.

**15.** Procédé pour supporter une communication sans fil sur un canal radio mobile (603) au moyen de systèmes multiporteuses sans fil assistés par pilote, comprenant les étapes de :

- réalisation d'une modulation multiporteuse OFDM (609) et d'une démodulation multiporteuse OFDM (617) d'un signal présentant une structure de salves de données selon l'une quelconque des revendications 1 à 9 ;
- réalisation d'une estimation de canal (618) sur la base de l'au moins un symbole de pilote (208) de l'au moins un préambule additionnel (210) dudit signal.

**16.** Procédé selon la revendication 15, dans lequel une égalisation de canal est réalisée.

**17.** Procédé selon la revendication 15 ou 16, dans lequel une synchronisation est réalisée sur la base du préfixe cyclique (202) dudit signal.

EP 1 276 288 B1

*100*  *101*

| Preamble P |
| --- |
| $T_{preamble} = 2 \cdot T_{MC} = 2 \cdot T_G + 2 \cdot T_S = 8 \ \mu s$ |

| CP ≡ P₁ (32 C-samples) | P₂ (N$_{ST}$ = 64 C-samples) | P₃ (N$_{ST}$ = 64 C-samples) |
| --- | --- | --- |
| ← 2·T$_G$ = 16 μs → | ← T$_S$ = 3.2 μs → | ← T$_S$ = 3.2 μs → |

*102*

*103*  *104*

⇑

⇑

copy of the last 32 OFDM symbols of one of the two identical P-fields
being inserted into the CP-field

FIG. 1a

*105*  *106*

| P | D 00 | D 01 | D 02 | D 03 | D 04 | D 05 | D 06 | D 07 | D 08 | D 09 | D 10 | D 11 | D 12 | D 13 | D 14 | D 15 | D 16 | D 17 | D 18 | D 19 | D 20 | D 21 | D 22 | D 23 | D 24 | D 25 |
| --- | --- | --- | --- | --- | --- | --- | --- | --- | --- | --- | --- | --- | --- | --- | --- | --- | --- | --- | --- | --- | --- | --- | --- | --- | --- | --- |

wherein

| P (m C-samples) |
| --- |

*105*

comprises

| P₁ (32 C-samples) | P₂ (64 C-samples) | P₃ (64 C-samples) | ... |
| --- | --- | --- | --- |

*105a*  *105b*

FIG. 1b  *105c*  *105d*

*105*  *107a*  *105*  *107b*  *105*  *107c*  *105*  *107d*

| P | D 00 | D 01 | D 02 | D 03 | D 04 | D 05 | D 06 | D 07 | P | D 08 | D 09 | D 10 | D 11 | D 12 | D 13 | D 14 | D 15 | P | D 16 | D 17 | D 18 | D 19 | D 20 | D 21 | D 22 | D 23 | P | D 24 | D 25 |
| --- | --- | --- | --- | --- | --- | --- | --- | --- | --- | --- | --- | --- | --- | --- | --- | --- | --- | --- | --- | --- | --- | --- | --- | --- | --- | --- | --- | --- | --- |

wherein

| P (m C-samples) |
| --- |

*105*

comprises

| P₁ (32 C-samples) | P₂ (64 C-samples) | P₃ (64 C-samples) | ... |
| --- | --- | --- | --- |

*105a*  *105b*

FIG. 1c  *105c*  *105d*

201

Preamble P

$T_{preamble} = 1 \cdot T_{MC} = 1 \cdot T_G + 1 \cdot T_S = 4.0 \, \mu s$

| CP ≡ P₁ (32 C-samples) | P₂ (64 C-samples) | P₃ (64 C-samples) | ... |

$T_G = 1.6 \, \mu s$   $m \cdot T_S = m \cdot 3.2 \, \mu s$   205

202   203   204

FIG. 2a

206

Preamble P"

$T_{preamble}' = 1 \cdot T_{MC} = 1 \cdot T_G + 1 \cdot T_S = 4.0 \, \mu s$

| CP" ≡ P₁' (16 C-samples) | P₂' (N'ₛᵢ = 64 C-samples) |

$T_G = 0.8 \, \mu s$   $T_S = 3.2 \, \mu s$

207   208

FIG. 2b

209   211

| P | D 00 | D 01 | D 02 | D 03 | D 04 | D 05 | D 06 | D 07 | D 08 | D 09 | D 10 | D 11 | D 12 | D 13 | D 14 | D 15 | D 16 | D 17 | D 18 | D 19 | D 20 | D 21 | D 22 | D 23 | D 24 | D 25 |

FIG. 2c

209   210   212a   212b   212c   210   212d

| P | D 00 | D 01 | D 02 | D 03 | D 04 | D 05 | D 06 | D 07 | P" | D 08 | D 09 | D 10 | D 11 | D 12 | D 13 | D 14 | D 15 | P" | D 16 | D 17 | D 18 | D 19 | D 20 | D 21 | D 22 | D 23 | P" | D 24 | D 25 |

FIG. 2d

Preamble P — 301

$T_{preamble} = 1 \cdot T_{MC} = 1 \cdot T_G + 1 \cdot T_S = 4.0 \ \mu s$

| CP ≡ P₁ (32 C-samples) | P₂ (64 C-samples) | P₃ (64 C-samples) | ... |

$T_G = 1.6 \ \mu s$ — 303 — $m \cdot T_S = m \cdot 3.2 \ \mu s$

302 — 304 305

FIG. 3a

Modified Preamble P' — 306

$T_{preamble}' = 1 \cdot T_{MC} = 1 \cdot T_G + 1 \cdot T_S = 4.0 \ \mu s$

| CP' ≡ P₁' (16 C-samples) | P₂' (N'ₛₜ = 64 C-samples) |

$T_G = 0.8 \ \mu s$ — 308 — $T_S = 3.2 \ \mu s$

307

FIG. 3b

309 — 313

| +1 | +1 | +1 | +1 | -1 | -1 | -1 | +1 | -1 | -1 | -1 | +1 | +1 | -1 | +1 | -1 | -1 | +1 | +1 | -1 | +1 | +1 | ... |
| P | D 00 | D 01 | D 02 | D 03 | D 04 | D 05 | D 06 | D 07 | D 08 | D 09 | D 10 | D 11 | D 12 | D 13 | D 14 | D 15 | D 16 | D 17 | D 18 | D 19 | D 20 | D 21 | D 22 | D 23 | D 24 | D 25 |

311

FIG. 3c

309 — 313

| +1 | +1 | +1 | +1 | -1 | -1 | -1 | +1 | -1 | -1 | -1 | +1 | +1 | -1 | +1 | -1 | -1 | +1 | +1 | -1 | +1 | +1 | ... |
| P | D 00 | D 01 | D 02 | D 03 | D 04 | D 05 | D 06 | D 07 | P' | D 08 | D 09 | D 10 | D 11 | D 12 | D 13 | D 14 | D 15 | P' | D 16 | D 17 | D 18 | D 19 | D 20 | D 21 | D 22 | D 23 | P' | D 24 | D 25 |

312a — 310 — 312b — 310 — 312c — 310 — 312d

FIG. 3d

EP 1 276 288 B1

401

Preamble P

| P₁ (n₁ C-samples from antenna 1) | P₂ (n₂ C-samples from antenna 2) | ... | Pₘ (nₘ C-samples from antenna m) |

402    403    404    405

**FIG. 4a**

**FIG. 4b**

**FIG. 4c**

503

504

| P | D 00 | D 01 | D 02 | D 03 | D 04 | D 05 | D 06 | D 07 | D 08 | D 09 | D 10 | D 11 | D 12 | D 13 | D 14 | D 15 | D 16 | D 17 | D 18 | D 19 | D 20 | D 21 | D 22 | D 23 | D 24 | D 25 |

501 502

FIG. 5a

507a  508a  507b  508b  507c  508c  507d  508d

| P | D 00 | D 01 | D 02 | D 03 | D 04 | D 05 | D 06 | D 07 | P' | D 08 | D 09 | D 10 | D 11 | D 12 | D 13 | D 14 | D 15 | P' | D 16 | D 17 | D 18 | D 19 | D 20 | D 21 | D 22 | D 23 | P' | D 24 | D 25 |

501  506a  505  506b  505  506c  505  506d

FIG. 5b

FIG. 6

64 subcarriers

6 | 6 | 1 3 | 6 | 6 | 13 | 5 | 5

FFT

702

FIG. 7b

$\Delta f = 0.3125$ MHz

$N_{ST} = 64$ subcarriers

$B_{sys} = 20$ MHz

64 OFDM samples (time domain), $T_s = 3.2$ μs

64 OFDM samples (time domain), $T_s = 3.2$ μs

guard subcarrier

pilot symbol

data symbol

free subcarrier

6 | 5 | 13 | 6 | 6 | 13 | 5 | 5

64 subcarriers

IFFT

701

FIG. 7a